# EUROPEAN PATENT SPECIFICATION

(11) **EP 4 592 875 B1**
(45) Date of publication and mention of the grant of the patent: **14.10.2026**
(21) Application number: 25154639.6
(22) Date of filing: 29.01.2025
(51) Int. Cl.: G06F 21/31, G06F 3/0354, G06F 21/32, G06F 21/34, G06F 21/35, G06F 21/41, H04L 9/32, H04L 9/40

(54) **STYLUS-BASED AUTHENTICATION AND USER EXPERIENCE CUSTOMIZATION**
STIFTBASIERTE AUTHENTIFIZIERUNG UND BENUTZERERFAHRUNGSANPASSUNG
AUTHENTIFICATION BASÉE SUR UN STYLET ET PERSONNALISATION D'EXPÉRIENCE D'UTILISATEUR

(30) Priority: 29.01.2024 US 202418425679
(43) Date of publication of application: 30.07.2025
(73) Proprietor: Microsoft Technology Licensing, LLC, Redmond, WA 98052-6399 (US)
(72) Inventor: DEKEL, Shoham, Redmond, 98052-6399 (US); GELLER, Ilan, Redmond, 98052-6399 (US); RON, Uri, Redmond, 98052-6399 (US)
(74) Representative: Page White Farrer

(56) References cited:
- US-A1- 2016 294 973
- US-A1- 2017 220 789
- US-A1- 2020 012 359
- US-A1- 2022 261 570
- ANONYMOUS: "Cintiq (DTK-2400) Setting up Using the display stand Using the pen Customizing the pen Using the pen display Customizing the pen display Using the Radial Menu Application-specific settings FAQs Troubleshooting", 1 January 2011 (2011-01-01), XP093389573, Retrieved from the Internet <URL:https://cdn.wacom.com/f/manuals/en/cintiq24hd-users-manual.pdf>

## Description

### BACKGROUND

A computing device may have multiple types of input devices, such as a keyboard, a mouse, a touch screen, etc. A stylus (e.g., or a touch instrument) may be used with a touch screen (or other type of touch surface). The stylus enables a user to write or draw on a touch screen in the form of digital ink. Digital ink is captured as digital data by a digitizer, enabling the digital ink to be used in various applications. Furthermore, a stylus may be used to interact with applications that require a user to log into a user account to access resources and/or perform certain functions.

US 2022/261570 discloses a stylus providing unique information about a user. US 2016/294973 discloses a peripheral device configured to interact with user devices associated with a user account.. US 2017/220789 discloses receiving a digital certificate corresponding to a user stylus.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a stylus according to claim 1. There is further provided a method according to claim 8. There is still further provided a system according to claim 12.

Embodiments are described herein for stylus-based authentication and user experience customization. In an aspect, embodiments provide authentication of a user account across multiple computing devices based on user interaction with a stylus. For example, a first session of a user account with respect to a first computing device of multiple computing devices is tracked based on user interaction with a stylus. In this example, contact between the stylus and a second computing device of the multiple computing devices is detected. Subsequent to the detection between the stylus and the second computing device, a second session of the user account with respect to the second computing device is caused to be established.

In a further aspect, an authentication token representative of the first session is maintained. Responsive to the detection of contact, the authentication token is provided to the second computing device or an authentication server to cause the second session of the user account to establish.

In a further aspect, responsive to the detection of contact, a determination of whether or not the second computing device is an authorized device is made.

In another aspect of the present disclosure, a system is configured to authenticate a user account across multiple computing devices based on user interaction with a stylus. In this aspect, the system tracks a first session of the user account with respect to a first computing device of the multiple computing devices based on the user interaction with the stylus. The system receives an indication of contact between the stylus and the second computing device of the multiple computing devices. The system establishes a second session of the user account with respect to the second computing device.

In a further aspect of the foregoing system, the system maintains an authentication token associated with the user account. The system provides the authentication token to the second computing device to establish the second session of the user account.

### BRIEF DESCRIPTION OF THE DRAWINGS/FIGURES

The accompanying drawings, which are incorporated herein and form a part of the specification, illustrate embodiments and, together with the description, further serve to explain the principles of the embodiments and to enable a person skilled in the pertinent art to make and use the embodiments.
FIG. 1 shows a block diagram of a system for stylus-based authentication and user experience customization, in accordance with an example embodiment.
FIG. 2 shows a block diagram of the stylus of FIG. 1 comprising a session handler, in accordance with an example embodiment.
FIG. 3A shows a flowchart of a process for authenticating a user account based on a user interaction with a stylus, in accordance with an example embodiment.
FIG. 3B shows a flowchart of a process for authenticating a user account across multiple computing devices based on a user interaction with a stylus, in accordance with an example embodiment.
FIG. 4 shows a flowchart of process for determining whether or not to establish a session of a user account, in accordance with an example embodiment.
FIG. 5 shows a flowchart of a process for causing a session of a user account to establish, in accordance with an example embodiment.
FIG. 6 shows a flowchart of a process for providing an authentication token, in accordance with an example embodiment.
FIG. 7 shows a flowchart of a process for erasing an authentication token, in accordance with an example embodiment.
FIG. 8 shows a flowchart of a process for raising a timeout flag, in accordance with an example embodiment.
Fig. 9 shows a block diagram of the authentication server of FIG. 1 comprising a session handler, in accordance with an example embodiment.
FIG. 10 shows a flowchart of a process for authenticating a user account based on user interaction with a stylus, in accordance with an example embodiment.
FIG. 11 shows a block diagram of a system for authenticating a device, in accordance with an example embodiment.
FIG. 12 shows a flowchart of a process for authenticating a device, in accordance with an example embodiment.
FIG. 13 shows a block diagram of a system for identifying a user account, in accordance with an example embodiment.
FIG. 14 shows a block diagram of a system comprising a stylus and a computing device, in accordance with an example embodiment.
FIG. 15 shows a block diagram of an example computing environment in which embodiments may be implemented.
The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Embodiments for Stylus-Based Authentication and UX Customization

Embodiments of the present disclosure relate to stylus-based authentication and user experience customization. A stylus is a touch instrument (e.g., a pen) that may be used with a touch screen or other electronic device comprising a digitizer (e.g., a touch pad). For example, a stylus enables a user to write or draw on a touch screen or touch pad in the form of digital ink. Digital ink is captured as digital data by a digitizer, enabling the digital ink to be used in various applications (e.g., converted to text, converted to drawings, providing touch input (e.g., selecting icons, checking boxes, etc.), etc.). In some embodiments, a touch instrument provides feedback to users (e.g., haptic feedback). Furthermore, in some embodiments, a touch instrument includes one or more sensors configured to detect a user's grip on the stylus, a user's posture, pressing (or releasing) a button of the stylus, movement of the stylus (e.g., linear and/or angular velocity, position of different points along the stylus with respect to each other, etc.), and/or any other types of interaction with or use of the stylus.

Embodiments of the present disclosure may be configured to identify a user based on characteristics of a user's grip, a user's posture, movement of a stylus, and/or other interactions with or use of styluses. Furthermore, embodiments of the present disclosure are configured to authenticate a user account across multiple computing devices based on user interaction with a stylus. For instance, a session of a user account is tracked with respect to a first computing device of multiple computing devices based on user interaction with the stylus (e.g., moving the stylus, gripping the stylus, interacting with sensors of the stylus). Contact between the stylus and a second computing device of the multiple computing devices is detected. Contact between a stylus and a computing device includes direct contact between the stylus and a touch surface of the computing device (e.g., at zero (0) hover height) or physical contact), proximity contact between the stylus and the touch surface (e.g., at a hover heigh greater than 0), contact between the stylus and the computing device via a (e.g., close proximity) communication network (e.g., an electrostatic communication channel, a Bluetooth network, a Wi-Fi network, etc.). Subsequent to detecting contact between the stylus and the second computing device, establishment of a session of the user account is caused with respect to the second computing device. In this manner, user interaction causes user account sessions to be established with respect to subsequent computing devices after an initial log-in to a first device. By enabling a user to log into user accounts in this way, embodiments reduce the time taken to log into a session and compute resources utilized to log into a session. For instance, the user interaction with the stylus may be used to log into a user account without reauthenticating with an authenticator service. Furthermore, in some embodiments, security features of a stylus may improve security with respect to a user's account.

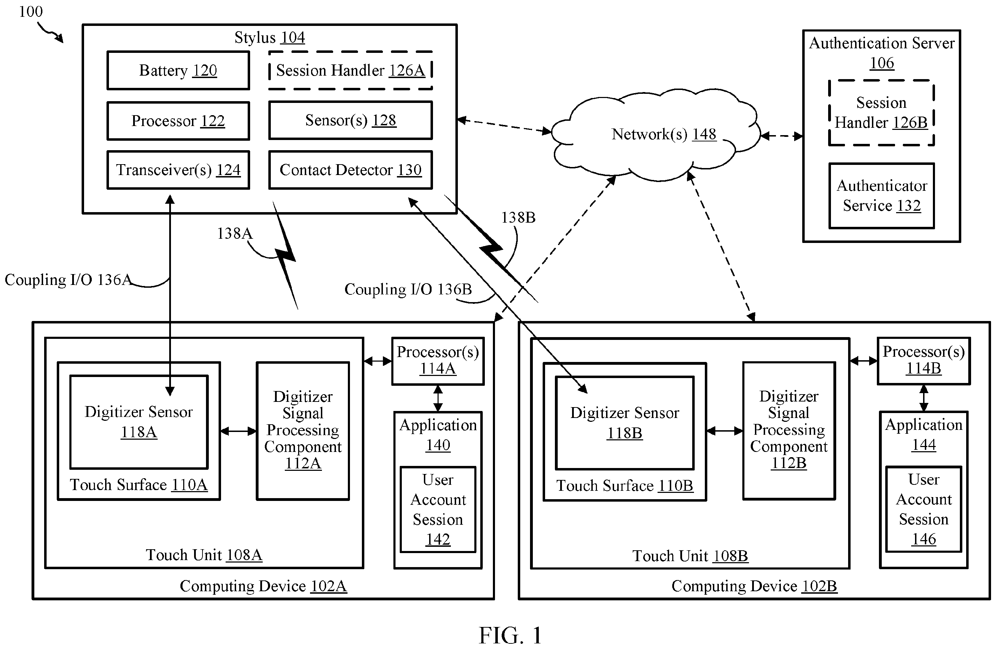

Embodiments of the present disclosure may be configured to enable authentication of a user account across multiple computing devices in various ways. For instance, FIG. 1 shows a block diagram of a system 100 for stylus-based authentication and user experience customization, in accordance with an example embodiment. As shown in FIG. 1, system 100 includes computing devices 102A and 102B, a stylus 104 and an authentication server 106. As also shown in FIG. 1, computing devices 102A and 102B, stylus 104, and authentication server 106 are communicatively coupled via network 148. Network 148 may comprise one or more networks such as local area networks (LANs), wide area networks (WANs), enterprise networks, the Internet, etc., and may include one or more wired and/or wireless portions. The features of system 100 are described in detail as follows.

Computing devices 102A and 102B may each be any type of stationary or mobile computing device including a mobile computer or mobile computing device (e.g., a personal digital assistance (PDA), a laptop computer, a notebook computer, a tablet computer, a netbook, etc.), a mobile phone, a wearable computing device, or other type of mobile device, or a stationary computing device such as a desktop computer or PC (personal computer), or a server. Computing devices 102A and 102B may each include respective one or more applications, operating systems, virtual machines (VMs), storage devices, etc., that may be executed, hosted, and/or stored therein or via one or more other computing devices via network(s) (not shown in FIG. 1). Computing devices 102A and 102B may execute one or more processes in one or more computing environments. A process is any type of executable (e.g., binary, program, application, etc.) that is being executed by a computing device. A process may include an automated pairing process. A computing environment may be any computing environment (e.g., any combination of hardware, software, and/or firmware). Although system 100 of FIG. 1 is depicted as including two computing devices 102A and 102B, embodiments described herein may include fewer (e.g., one) or greater (e.g., more than two, tens, and/or even greater) numbers of computing devices.

As shown in FIG. 1, computing device 102A comprises a touch unit 108A and a processor 114A and computing device 102B comprises a touch unit 108B and a processor 114B. Touch units 108A and 108B include respective touch surfaces 110A and 110B and respective digitizer signal processing components 112A and 112B. In some embodiments, touch unit 108A and/or touch unit 108B include respective graphics processing units (GPUs) (not shown in FIG. 1) configured to execute processes of respective touch unit 108A and/or 108B. Alternatively, processes of touch unit 108A and/or touch unit 108B are executed by respective processors 114A and/or 114B.

Touch surfaces 110A and 110B are each configured as respective input devices for user input (e.g., by touch and/or use of a stylus). In some embodiments, touch surface 110A and/or touch unit 110B are display devices. Touch surfaces 110A and/or 110B may include respective integrated touch interfaces (e.g., a touch screen (e.g., a liquid crystal display (LCD) touch screen, a light emitting diode (LED) touch screen, a plasma display touch screen, etc.) or a touch pad) or a peripheral touch interface. Touch surfaces 110A and 110B include respective digitizer sensors 118A and 118B, which each may be implemented as an antenna array (e.g., a two-dimensional array of antenna elements/electrodes). Touch surfaces 110A and/or 110B may be utilized by a user (or users) through user interaction with touch instruments, such as stylus 104, e.g., to perform inking operations. Digitizer signal processing components 112A and 112B are configured to process (e.g., at least in part) signals generated by respective digitizer sensors 118A and 118B, e.g., in response to user interaction with respective touch surfaces 110A and/or 110B. In accordance with an embodiment either of digitizer signal processing components 112A and 112B are touch controllers. Software applications, regardless of where executed, may respond to user interaction with either touch surface 110A and/or touch surface 110B (also referred to as user touch input or inking operations).

Digitizer sensors 118A and 118B detect touch-related operations with direct contact or with proximity contact. Digitizer sensors 118A and 118B are configured to detect interactions and communications (e.g., commands and/or information) associated with stylus 104. For example, digitizer sensor 118A and/or digitizer sensor 118B in accordance with an embodiment are configured to receive and/or transmit communication signals from and/or to stylus 104. Antennas (e.g., electrodes) in respective digitizer sensors 118A and 118B may detect energy (e.g., coupling and transmission energy) associated with operations using stylus 130. Digitizer sensors 118A and 118B may detect energy in a variety of forms and sources, such as respective electrostatic couplings 136A and 136B, respective wirelessly transmitted signals 138A and 138B conveying information (e.g., haptic parameters, sensor output, etc.), etc. Signals generated by digitizer sensors 118A and 118B may also be referred to as "touch input signals" that correspond to an amount of touch (e.g., a location/area of touch, a pressure/force of touch, etc.) by a type of touch instrument (such as, but not limited to, stylus 104 or a human appendage (e.g., a finger, multiple fingers, a palm, etc.)). Digitizer signal processing components 112A and 112B may be configured to receive and process signals indicative of interactions and communications (e.g., commands and/or information) associated with stylus 104 and respective touch surfaces 110A and 110B, for example, to determine when and/or where to implement inking operations, implement erasing operations, provide feedback, provide device identifying information (e.g., a device identification (ID) of the respective computing device (e.g., a media access control (MAC) address, Internet protocol (IP) address, a device name, etc.), a user account associated with the respective computing device, geolocation information of the respective computing device, and/or any other information suitable for identifying the respective computing device), etc. Digitizer signal processing components 112A and 112B may determine interactions and communications by processing energy detected by respective digitizer sensors 118A and 118B.

As discussed above (as well as elsewhere herein), computing devices 102A and 102B may execute one or more processes. For instance, as shown in FIG. 1, computing device 102A is configured to execute application 140 and computing device 102B is configured to execute application 144. Applications 140 and 144 are respective applications executed by respective processors 114A and 114B to perform respective functions. Examples of applications 140 and 144 include, but are not limited to, word processing applications, document viewer applications (e.g., an application for viewing, modifying, creating, and/or otherwise interacting with documents such as, but not limited to, portable document format (PDF) documents), drawing applications, web applications, and/or other types of software (e.g., operating systems, boot programs, etc.) and/or other applications executable by respective processors 114A and/or 114B to perform respective functions. In accordance with an embodiment, applications 140 and 144 are respective front end components of respective applications. In some embodiments, applications 140 and 144 are front end components of the same application.

A user may use stylus 104 to interact with touch surfaces 110A and/or 110B. Stylus 104 of FIG. 1 is an active device. Examples of stylus 104 include, without limitation, a digital pen, a light pen, a wearable device for a user's finger, a glove, etc. Stylus 104 may be held and wielded by a user to interact with computing devices 102A and/or 102B to perform functions such as selecting objects, writing/inking, shading (e.g., low force inking), erasing, and/or the like.

Stylus 104 includes a battery 120, a processor 122, one or more transceivers 124 ("transceiver 124" herein), one or more sensors 128 ("sensors 128" herein), and contact detector 130. In some embodiments, and as shown in FIG. 1, stylus 104 includes a session handler 126A, which is described in greater detail further below, as well as elsewhere herein. Battery 120 is configured to power processor 122, power transceiver 124, and/or hardware (e.g., in hardware and/or hardware with software/firmware implementations) of contact detector 130. Processor 122 is configured to execute programs related to operations of stylus 104, such as but not limited to, communication (e.g., transmission and/or reception) of commands and/or information (e.g., inking parameters, haptic parameters, device identifying information, etc.) between stylus 104 and a computing device (e.g., computing device 102A, computing device 102B, authentication server 106), detection of contact between stylus 104 and a computing device (e.g., in a software, a firmware, and/or a combination of a hardware and software/firmware implementation of contact detector 130), and/or the any other operations of stylus 104, as described elsewhere herein and/or as otherwise would be understood by a person ordinarily skilled in the relevant art(s) having benefit of this disclosure. Processor 122 may send and/or receive commands through transceiver 124. Contact detector 130 is configured to detect and/or cause contact between stylus 104 and a computing device (e.g., computing device 102A, computing device 102B, etc.). Contact detector 130 may comprise a Bluetooth detector, a near-field communication (NFC) detector, one or more electrodes (e.g., for interacting with electrodes of digitizer sensors 118A and 118B), and/or any other hardware, firmware, and/or software configured for detecting contact between stylus 104 and a computing device.

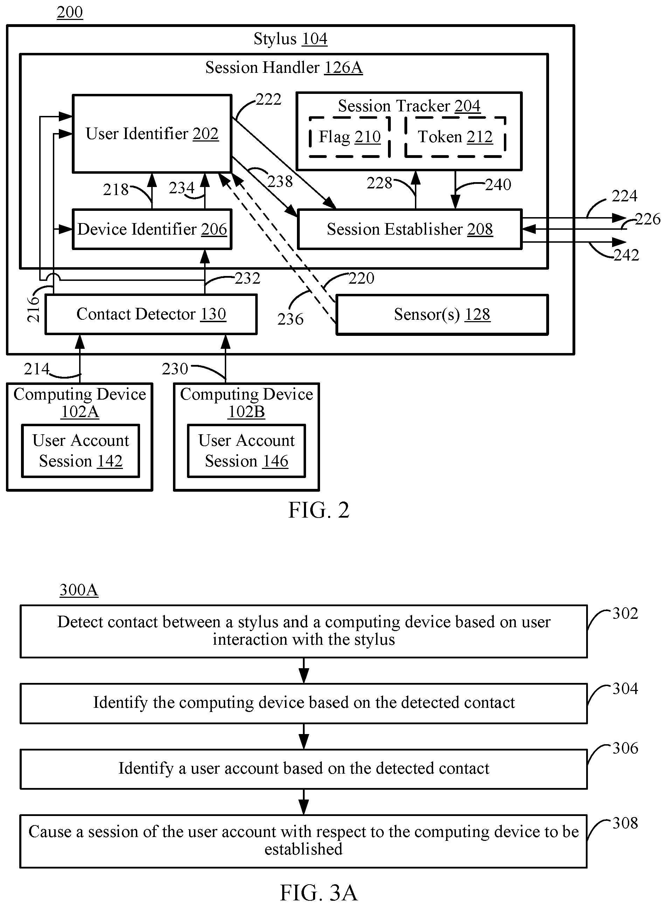

Sensors 128 comprise one or more sensors for generating signals based on detected information. Example sensors include, but are not limited to, grip sensors (e.g., touch sensors, pressure sensors, temperature sensors, etc.), accelerometers, and gyroscopes. Stylus 104 may include any number of sensors, including multiple sensors of the same type and/or sensors of different types. In accordance with an embodiment, one or more signals generated by sensors 128 are utilized to identify a user account. Further details regarding user account identification based on sensor output are described with respect to FIGS. 2, 3A, 3B, and 13, as well as elsewhere herein.

Authentication server 106 is a network-accessible server (or other type of computing device). In accordance with an embodiment, authentication server is incorporated in a network-accessible server set (e.g., a cloud-based environment, an enterprise network server set, and/or the like). Authentication server 106 may comprise a single server device or multiple server devices. Authentication server 106 is configured to execute and/or store data. For example, as shown in FIG. 1, authentication server 106 executes an authenticator service 132. In some embodiments, and as shown in FIG. 1, authentication server 106 includes a session handler 126B, which is described in greater detail further below, as well as elsewhere herein. Authenticator service 132 is configured to authenticate credentials and/or other identifying information for a user account. In accordance with an embodiment, authenticator service 132 determines whether a user account is allowed access to applications or resources associated with applications (e.g., data, confidential information, functions of the application, etc.) based on an access policy. In accordance with an embodiment, authenticator service 132 provides an authentication token that indicates a user account has been authenticated. In this context, a user account, a device operating on behalf of the user account, and/or an application executing on behalf of the user account may present the authentication token to indicate the user account has been authenticated.

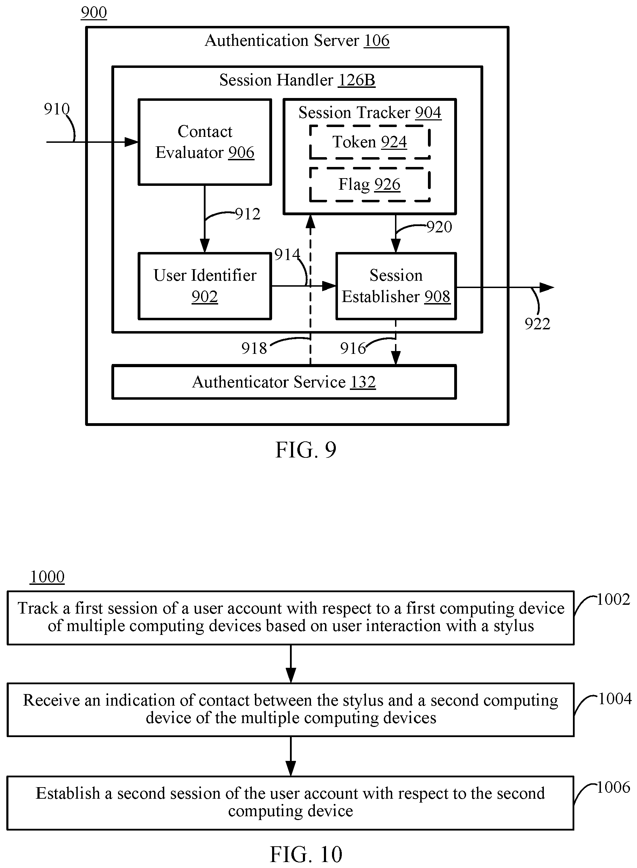

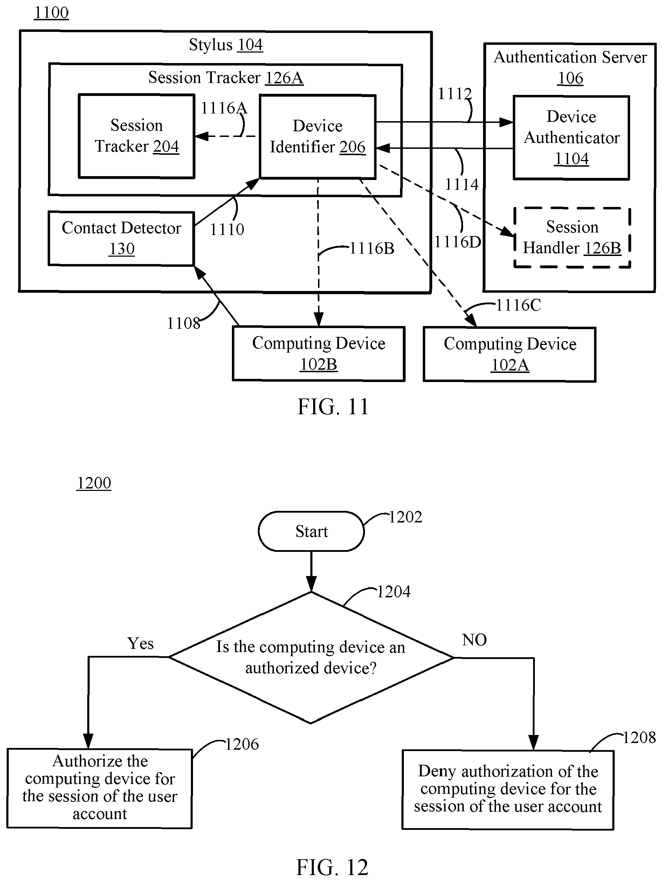

As described above, stylus 104 may include a session handler 126A and/or authentication server 106 may include a session handler 126B. Session handlers 126A and 126B are configured to track established user account sessions, cause user account sessions to be established, and/or perform other operations associated with management and/or cause of establishment of user account sessions, as described elsewhere herein. Additional details regarding a session handler implemented in a stylus (e.g., such as session handler 126A) are described with respect to FIGS. 2-8, as well as elsewhere herein. Furthermore, additional details regarding a session handler implemented in an authentication server (e.g., such as session handler 126B) are described with respect to FIGS. 9 and 10, as well as elsewhere herein. Moreover, further details regarding session handlers implemented in either styluses or authentication servers are described with respect to FIGS. 11-13, as well as elsewhere herein. In accordance with some embodiments, computing devices 102A and/or 102B include logic and/or hardware configured to perform one or more operations of session handler 126A and/or 126B (e.g., processing signals to identify user accounts and/or devices, tracking active user account sessions, cause establishment of user account sessions, etc.). In accordance with some embodiments, an application executing on computing device 102A and/or 102B (e.g., application 140 and/or application 144) includes logic that, when executed, performs one or more operations of session handler 126A and/or 126B. For example, in accordance with an alternative embodiment, application 140 (and application 144) comprise a session handler (not shown in FIG. 1) that identifies a user account (e.g., based on user interaction with stylus 104 and a respective computing device), causes a session of the user account to be established with respect to the respective computing device, tracks the established user account session, and/or performs any other operations associated with the management of and/or establishment of user account sessions, as described elsewhere herein.

As described herein, computing device 102A executes application 140 and computing device 102B executes application 144. In embodiments, a user may be required to log into or otherwise authenticate in order to interact with or access resources associated with applications 140 and 144. A session handler, such as session handler 126A or session handler 126B, is configured to manage and/or cause the authentication of the user (or an account of the user ("user account" herein)) to access the respective application. In this context, a user (and/or a service and/or device on behalf of the user) provides one or more credentials (e.g., a password, an authentication token, a personal identification number (PIN), a multi-factor authentication (MFA) challenge response, and/or other credential) (e.g., via a user interface of respective applications 140 and/or 144) to authenticate the user's identity. In accordance with an embodiment, the user provides one or more credentials via interaction with stylus 104 and/or computing devices 102A and/or 102B. In accordance with an embodiment, and as described herein, session handler 126A and/or 126B receives the credential and provides the credential to authentication service 132 (or a back-end component of the corresponding application, not shown in FIG. 1) for authentication thereof. In some embodiments, session handler 126A and/or 126B comprises logic configured to identify the user, an account of the user, stylus 104, and/or the computing device stylus 104 is in contact with. In this context, session handler 126A and/or 126B causes authentication of the user (or the user account of the user) based on the identification. For instance, the session handler may release an authentication token to the corresponding application in response to identifying the user. Alternatively, the session handler provides credentials (and/or other identifying information) to authenticator service 132 in response to identifying the user. In either case, if the user is authenticated, a user account session is established with the respective application. For instance, subsequent to interaction with computing device 102A and authentication of the user, a user account session 142 is established for application 140. As also shown in FIG. 1, subsequent to interaction with computing device 102B and authentication of the user, a user account session 146 is established for application 140. Further details regarding establishing user account sessions are described with respect to FIGS. 2-6 and 9-13, as well as elsewhere herein.

### III. Embodiments of Styluses Comprising Session Handlers

As described herein, stylus 104 of FIG. 1 in some embodiments includes a session handler 126A. Session handler 126A may be configured to track a session of a user account with respect to a computer device and/or cause a session of a user account to be established in various ways, in embodiments. For example, FIG. 2 shows a block diagram of a system 200 comprising stylus 104 of FIG. 1 comprising session handler 126A, in accordance with an example embodiment. As shown in FIG. 2, system 200 comprises computing device 102A (with user account session 142), computing device 102B (with user account session 146), and stylus 104 (comprising session handler 126A, sensors 128, and contact detector 130 and additional components not shown in FIG. 2 for illustrative brevity (e.g., battery 120, processor 122, and transceivers 124)), as described with respect to FIG. 1. As also shown in FIG. 2, session handler 126A comprises a user identifier 202, a session tracker 204, a device identifier 206, and a session establisher 208, each of which may be implemented as sub-services (e.g., software, firmware, etc.), sub-components (e.g., logic circuits, memory devices, processors, etc.), or a combination of sub-services and sub-components of session handler 126A.

In embodiments, contact detector 130 is configured to detect contact between a stylus and a computing device and session handler 126A is configured to cause a user account to be authenticated and a session to be established based on the detected contact. To better understand embodiments of contact detector 130 and session handler 126A configured to cause user account authentication and session establishment, FIG. 2 is described with respect to FIG. 3A. FIG. 3A shows a flowchart 300A of a process for authenticating a user account based on a user interaction with a stylus, in accordance with an example embodiment. Stylus 104 of FIG. 2 may operate according to flowchart 300A in embodiments. Note not all steps of flowchart 300A need be performed in all embodiments. For illustrative purposes in understanding the flow of FIG. 3A, steps of flowchart 300A are described with respect to authenticating a user account and establishing user account session 142 with respect to computing device 102A of FIG. 1; however, embodiments described herein are not so limited. Further structural and operational embodiments will be apparent to persons skilled in the relevant art(s) based on the following descriptions of FIGS. 2 and 3A.

Flowchart 300A begins with step 302. In step 302, contact between a stylus and a computing device is detected based on user interaction with the stylus. For example, suppose (as shown in FIG. 2) contact detector 130 detects contact between stylus 104 and computing device 102A based on user interaction with stylus 104. Contact detector 130 may be configured to detect contact in various ways, in embodiments. For instance, as shown in FIG. 2, contact detector 130 receives signal 214 representative of user interaction with stylus 104 and computing device 102A. Signal 214 in accordance with an embodiment is received via coupling 136A of FIG. 1. Alternatively, signal 214 is wireless signal 138A of FIG. 1. In accordance with an embodiment, signal 214 comprises a device ID that (e.g., uniquely) identifies computing device 102A. In accordance with an embodiment, signal 214 represents user interaction with stylus 104 and computing device 102A that corresponds with an attempt to log into an application (e.g., application 140) executing on computing device 102A. In this context, signal 214 may comprise an application ID that (e.g., uniquely) identifies the application the user is attempting to log into. In accordance with an embodiment, and as shown in FIG. 1, contact detector 130 generates a detection signal 216 responsive to signal 214 and provides detection signal 216 to user identifier 202 and/or device identifier 206. Detection signal 216 indicates the detected contact as well as any information associated with and/or derived from the detection of the contact (e.g., the device ID of computing device 102A, inking information associated with the detected contact, the type of signal of signal 214, the application ID of the application, etc.). In an alternative embodiment, contact detector 130 provides a first detection signal to user identifier 202 and a second detection signal to device identifier 206, wherein each detection signal comprises information derived from the detection of the contact usable by the respective component of session handler 126A (e.g., user identifying information for user identifier 202 and device identifying information for device identifier 206).

In step 304, the computing device is identified based on the detected contact. For example, device identifier 206 of FIG. 2 identifies computing device 102A based on the detected contact indicated by detection signal 216. In this context, detection signal 216 comprises information suitable for identifying computing device 102A (e.g., a device ID of computing device 102A). In accordance with an embodiment, and as shown in FIG. 2, device identifier 206 provides a device identification signal 218 to user identifier 202. In accordance with an embodiment, and as described with respect to FIGS. 11 and 12 (as well as elsewhere herein), device identifier 206 comprises logic for evaluating whether or not the identified computing device is an authorized device.

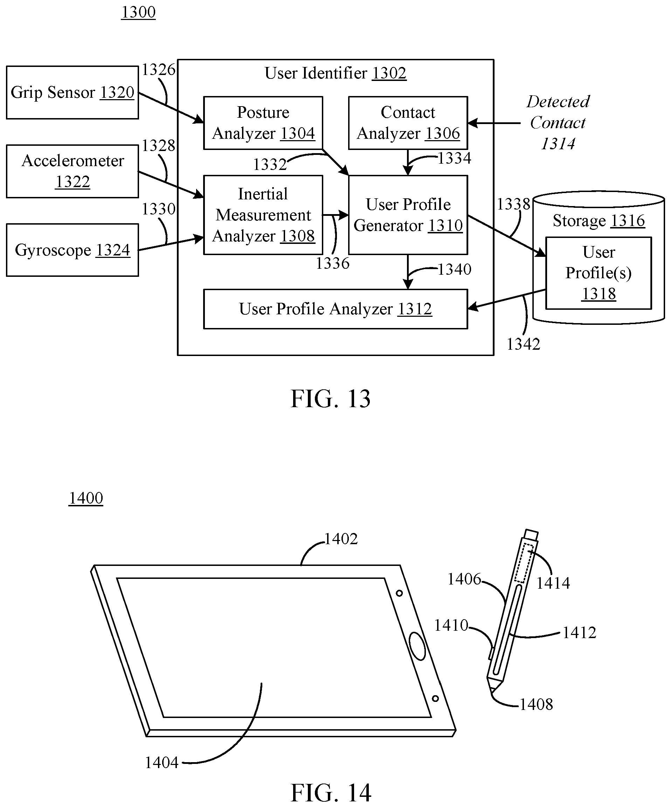

In step 306, a user account is identified based on the detected contact. For example, user identifier 202 of FIG. 2 identifies a user account based on the detected contact indicated by detection signal 216. In this context, detection signal 216 comprises information derived from signal 214 that, when analyzed by user identifier 202, identifies a user account (or a user of the user account). For instance, detection signal 216 may include information indicative of the velocity of a tip of stylus 104 of FIG. 1 across touch surface 110A. In some embodiments, user identifier 202 identifies the user account based on signals other than (or in addition to) detection signal 216. For instance, user identifier 202 may be configured to identify the user account based on (e.g., information included in detection signal 216 and) the device indicated by device identification signal 218 and/or signal(s) 220 ("signals 220" herein) output by sensors 128. For example, user identifier 202 may include logic configured to analyze a user's grip or posture with respect to stylus 104, a (e.g., pattern of) movement of stylus 104, pressing or releasing a button, and/or other information detected by a sensor of sensors 128 and represented by a signal of signals 220. In accordance with an embodiment, and as described further with respect to FIG. 13 (and elsewhere herein), user identifier 202 analyzes information included in detection signal 216, device identification signal 218, and/or signals 220 with respect to previously generated user profiles. In this context, user profiles define characteristics of a user associated with a particular user account. For instance, a user profile may include a user's typical grip (e.g., how much pressure they place on the stylus), a user's posture (e.g., where they place their finger(s) on a stylus, how many fingers they place on a stylus, whether or not their palm touches the stylus, whether they are left- or right-handed, etc.), the speed the user typically moves a stylus, and/or any other characteristics recorded from previous uses of a stylus (such as stylus 104) by a user. Additional details regarding identification of users, user accounts, and user profiles are described with respect to FIG. 13, as well as elsewhere herein. As shown in FIG. 2, user identifier 202 generates a user identification signal 222 that indicates the identified user account (or user thereof).

In step 308, a session of the user account is caused to be established with respect to the computing device. For example, session establisher 208 of FIG. 2 causes user account session 142 to be established with respect to computing device 102A. Session establisher 208 may cause the identified user account to be established in various ways. For example, as shown in FIG. 2, session establisher 208 receives user identification signal 222 and generates a session request 224. Session request 224 is a request to establish a session of the identified user account with respect to a computing device 102A (e.g., to log into an application (e.g., application 140), to log into an account of an operating system of computing device 102A, and/or to otherwise establish a user account session with respect to computing device 102A). In accordance with an embodiment, session request 224 includes a credential for authenticating the user account. The credential may be stored by session handler 126A, obtained from computing device 102A (or an application executing thereon) (e.g., via signal 214, in a subsequent communication not shown in FIG. 2), obtained from another computing device (e.g., a mobile phone or another type of computing device), and/or the like. Depending on the implementation, session establisher 208 may provide session request 224 to authenticator service 132, to a back-end component of application 140, or to computing device 102A (e.g., to provide to authenticator service 132 or a back-end component of application 140).

If the authenticating service (e.g., authenticator service 132 or the back-end component of application 140) determines the credentials included in session request 224 are authentic (or otherwise determines the user account is authentic), the authenticating service provides an authenticated signal 226 to session establisher 208 (either directly or indirectly (e.g., via computing device 102A)). Authenticated signal 226 includes an authentication token that may be used to attest that the credentials are authentic. In this manner, session handler 126A or another component of stylus 104 may present the authentication token to cause sessions of the authenticated user account to be established (e.g., without having to re-authenticate with the authenticating service). As shown in FIG. 2, session establisher 208 provides the authentication token to session tracker 204 via signal 228 for storage/tracking as token 212. Session tracker 204 is configured to track authenticated user account sessions (e.g., by maintaining token 212). In some embodiments, token 212 has a "lifetime" or time period in which it is valid. After the lifetime expires, a refreshed token may be obtained by transmitting a request for a new token. In accordance with an embodiment, session tracker 204 raises a flag 210 when the lifetime of token 212 expires. In accordance with an embodiment, session establisher 208 provides token 212 to computing device 102A or application 140 to cause user account session 142 to be established. Alternatively, the authenticating service establishes user account session 142 (e.g., subsequent to authenticating the credentials included in session request 224).

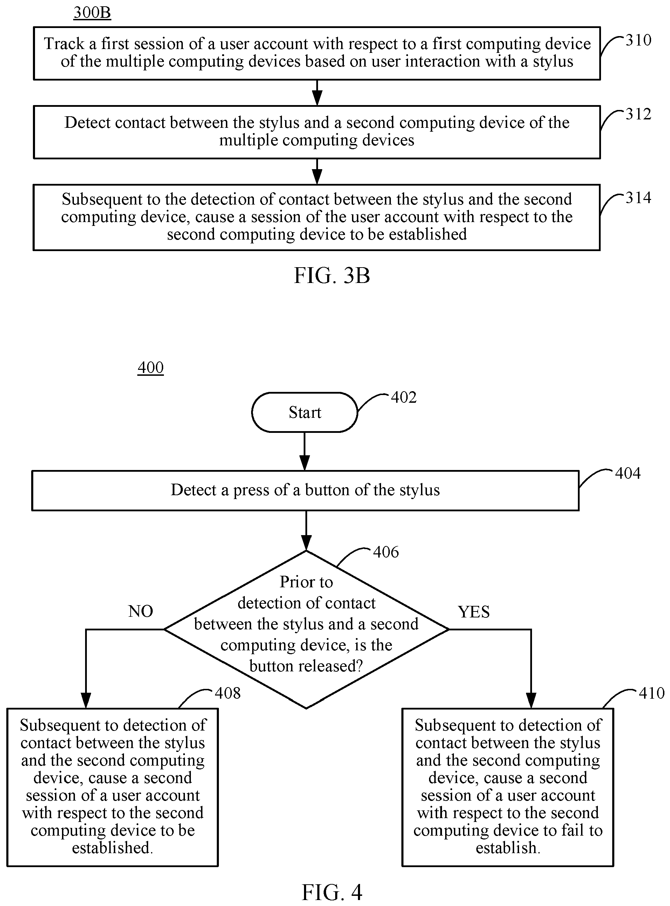

As discussed elsewhere herein, embodiments described herein enable authentication for user accounts based on user interaction with a stylus. For instance, with continued reference to stylus 104 and session handler 126A of FIG. 2, stylus 104 enables authentication of user account based on a session tracked by session tracker 204 and user interaction with stylus 104. In this manner, session handler 126A enables authentication of a user account across multiple computing devices. Stylus 104 comprising session handler 126A may operate in various ways to authenticate a user account across multiple computing devices, in embodiments. For example, FIG. 3B shows a flowchart 300B of a process for authenticating a user account across multiple computing devices based on a user interaction with a stylus, in accordance with an example embodiment. Stylus 104 of FIG. 2 may operate according to flowchart 300B in embodiments. Note not all steps of flowchart 300B need be performed in all embodiments. For illustrative purposes in understanding the flow of FIG. 3B, steps of flowchart 300B are described with respect to authenticating a user account and establishing user account session 146 with respect to computing device 102B of FIG. 1 subsequent to the steps of flowchart 300A of FIG. 3A; however, embodiments described herein are not so limited. Further structural and operational embodiments will be apparent to persons skilled in the relevant art(s) based on the following descriptions of FIGS. 2 and 3B.

Flowchart 300B begins with step 310. In step 310, a first session of a user account with respect to a first computing device of multiple computing devices is tracked based on user interaction with a stylus. For example, session tracker 204 of FIG. 2 tracks user account session 142 with respect to computing device 102A based on user interaction with stylus 104. The user interaction may include, but is not limited to, user interaction that initiated establishment of user account session 142, user interaction subsequent to establishment of user account session 142, and/or any other type of user interaction with stylus 104. For instance, session tracker 204 in accordance with an embodiment described further with respect to FIG. 4 tracks whether or not a user has pressed (and subsequently released) a button of stylus 104 (e.g., a button or touch sensor of sensors 128). In accordance with another embodiment, session tracker 204 tracks whether a user is gripping stylus 104 and if the user ceases to grip stylus 104 for a predetermined time. In accordance with an embodiment, session tracker 204 raises a flag (e.g., flag 210) if the user has ceased interacting with stylus 104 for longer than a predetermined time. In this manner, session tracker 204 prevents another user from utilizing stylus 104 to establish user account sessions of the first user (e.g., if stylus 104 was left unattended for a predetermined time, if stylus 104 is stolen, etc.), thereby increasing security in protecting access to the first user's account.

In step 312, contact between the stylus and a second computing device of the multiple computing devices is detected. For example, contact detector 130 of FIG. 2 detects contact between stylus 104 and computing device 102B of FIG. 1. Contact detector 130 may be configured to detect contact between stylus 104 and computing device 102B in similar ways as those described with respect to step 302 of flowchart 300A, as well as elsewhere herein. For instance, as shown in FIG. 2, contact detector 130 detects contact based on received signal 230. Signal 230 may be received via coupling 136B or via wireless signal 138B of FIG. 1. In accordance with an embodiment, signal 230 comprises a device ID that (e.g., uniquely) identifies computing device 102B. In accordance with an embodiment, signal 230 represents user interaction with stylus 104 and computing device 102B that corresponds with an attempt to log into an application (e.g., application 144) executing on computing device 102B. In this context, signal 230 may comprise an application ID that (e.g., uniquely) identifies the application the user is attempting to log into.

To better understand performance of step 312, and as a non-limiting example, suppose a user interacting with stylus 104 previously logged into a user account with respect to computing device 102A and user account session 142 was established with computing device 102A (e.g., in a manner as described with respect to flowchart 300A of FIG. 3A). In this example, session tracker 204 tracks user account session 142 in a manner as described with respect to step 310. Further suppose the user interacted with stylus 104 to initiate contact between stylus 104 and computing device 102B (e.g., by tapping touch surface 110B of computing device 102B with stylus 104, by placing stylus 104 within a hover distance over touch surface 110B of computing device 102B, by establishing a communication channel connection between stylus 104 and computing device 102B (e.g., a Bluetooth communication channel connection, an electrostatic communication channel connection, etc.), and/or otherwise initiating contact between stylus 104 and computing device 102B, as described elsewhere herein). In this example, signal 230 is a signal generated by computing device 102B (or a component thereof) and received and/or otherwise obtained by contact detector 130 (e.g., via electrodes of stylus 104, via transceivers 124 of stylus 104, and/or the like) that represents the initiated contact. Contact detector 130 generates a detection signal 232 responsive to signal 230 and provides detection signal 232 to user identifier 202 and/or device identifier 206.

In step 314, subsequent to the detection of contact between the stylus and the second computing device, establishment of a session of the user account with respect to the second computing device is caused. For example, subsequent to contact detected by contact detector 130, session establisher 208 causes user account session 146 to be established with respect to computing device 102B. Session establisher 208 may operate to cause establishment of user account session 146 in various ways, in embodiments. For instance, session establisher 208 in accordance with an embodiment causes establishment of user account session 146 by obtaining token 212 from session tracker 212 via signal 240 and providing a session request 242 comprising obtained token 212 to computing device 102B or a back-end component of application 144 to cause user account session 146 to be established. In this context, token 212 attests authentication of the user without requiring an authenticating service to re-authenticate the user account. In this way, a user may interact with a computing device they have already logged into (e.g., computing device 102A) and seamlessly (or near seamlessly) log into a second computing device (e.g., computing device 102B) via interaction with stylus 104, thereby conserving compute resources and reducing the time required to log into an account.

In some embodiments, session handler 126A is configured to verify the characteristics of user interaction related to the contact detected in step 312 are similar to expected characteristics of user interaction for the user associated with the user account session tracked in step 310 (e.g., user account session 142) before releasing token 212 or otherwise causing establishment of user account session 146. In accordance with an embodiment, user identifier 202 verifies the characteristics by identifying a user account based on detected contact indicated by detection signal 232. In some embodiments, device identifier 206 identifies computing device 102B (e.g., based on detection signal 232 in a similar manner described with respect to step 304 of flowchart 300A of FIG. 3A) and generates a device identification signal 234. In this context, user identifier 202 may verify characteristics based on device identification signal 234 (e.g., in addition to analysis of detection signal 232 by user identifier 202). In some embodiments, user identifier 202 identifies the user account based on signal(s) 236 ("signals 236" herein) output by sensors 128 (e.g., signals representing a user's grip or posture with respect to stylus 104, a movement of stylus 104, pressing or release of a button of stylus 104, and/or the like). In accordance with an embodiment, and as described further with respect to FIG. 13 (and elsewhere herein), user identifier 202 analyzes information included in detection signal 232, device identification signal 234, and/or signals 236 with respect to previously generated user profiles (or the user profile corresponding to user account session 142). If the user account identified by user identifier 202 matches the user account of the tracked user account session, user identifier 202 provides a user identification signal 238 to session establisher 208. In this context, session establisher 208 causes user account session 146 to be established subsequent to receiving user identification signal 238. In this manner, establishment of user account session 146 (and optionally release of token 212) is prevented until user identifier 202 verifies the user currently interacting with stylus 104 is the same (or an otherwise authorized) user associated with the tracked user account session, thus preventing unauthorized access to the user's account with respect to computing device 102B.

In some embodiments, session handler 126A is configured to cause a service or component external to stylus 104 to verify the characteristics of user interaction related to the contact detected in step 312 are similar to expected characteristics of user interaction for the user associated with the user account session tracked in step 310 (e.g., user account session 142) before causing establishment of user account session 146. In this context, user identifier 202 identifies characteristics of the user interacting with stylus 104 (e.g., based on detection signal 232, device identification signal 234, and/or signals 236). User identifier 202 provides user identification signal 238 comprising the identified characteristics. In this context, session establisher 208 provides session request 242 to an authenticating service (or to computing device 102B or computing device 102A to provide to the authenticating service) to cause the authenticating service to verify the identified characteristics match expected characteristics of the user associated with the tracked user account session 142. In this context, the circuits in stylus 104 may be simplified and/or reduced, thereby reducing manufacturing cost of stylus 104 and power consumed by operation of stylus 104. Furthermore, in this context, the authentication token (e.g., token 212) is maintained by the authenticating service, thus increasing security by preventing access to the token if stylus 104 is compromised.

In some embodiments, session establisher 208 causes a user experience to be customized based on the established user account session. For instance, session establisher 208 may cause content to be uploaded to computing device 102B, a user interface of computing device 102B to be customized (e.g., widgets or windows to be opened and positioned), settings of computing device 102B to be customized (e.g., accessibility settings, display settings, etc.), and/or otherwise customize the operation of computing device 102B in response to identifying the user and establishing a user account session.

As described herein, stylus 104 comprising session handler 126A may be configured to determine whether or not a user account session is to be established with respect to a user account (or, alternatively, cause another service or component to determine if the user account session should be established). FIG. 4 shows a flowchart 400 of process for determining whether or not to establish a session of a user account, in accordance with an example embodiment. Stylus 104 of FIG. 2 may operate according to flowchart 400 in embodiments. Note not all steps of flowchart 400 need be performed in all embodiments. Further structural and operational embodiments will be apparent to persons skilled in the relevant art(s) based on the following description of FIG. 4 with respect to FIG. 2.

Flowchart 400 begins with step 402. Step 402 in accordance with an embodiment comprises one or more steps of flowchart 300A of FIG. 3A. Alternatively, or additionally, step 402 comprises step 310 of flowchart 300B of FIG. 3B. For instance, in step 402, a user account session is established (or previously established) with respect to a first computing device (e.g., computing device 102A). In this context, session tracker 204 tracks the user account session.

In step 404, a press of a button of the stylus is detected. For instance, sensor 128 of FIG. 2 comprises a button that a user presses and session tracker 204 (or another component of session handler 126A) detects the button is pressed. In this context, the user pressing the button indicates to session tracker 204 that the user is (potentially) going to begin using stylus 104 with respect to a computing device other than the first computing device. In accordance with an embodiment, the detected button press causes session tracker 204 to clear a flag that prevents new user account sessions from being established. In accordance with an embodiment the button is a push-button of stylus 104. Alternatively, the button is a touch sensor (e.g., a capacitive touch sensor) of stylus 104.

In step 406, a determination is made of whether or not the button is released prior to detection of contact between the stylus and a second computing device. For example, session tracker 204 determines whether or not the button sensor is released based on output of the corresponding button sensor of sensors 128 prior to contact detector 130 detecting contact between stylus 104 and computing device 102B. If the button is not released prior to detection of the contact, flowchart 400 proceeds to step 408. If the button is released prior to detection, flowchart 400 proceeds to step 410. By making this determination, session tracker 204 improves security by tracking if the user (who has already been authenticated with respect to computing device 102A) maintains interaction with stylus 104 (e.g., by pressing the button) in between user interaction with computing device 102A and subsequent user interaction with computing device 102B. Further technical benefits of such embodiments are described with respect to steps 408 and 410, as well as elsewhere herein.

In step 408, subsequent to detection of contact between the stylus and the second computing device, establishment a second session of a user account with respect to the second computing device is caused. For example, subsequent to contact detector 130 detecting contact between stylus 104 and computing device 102B (e.g., as described with respect to step 312 of flowchart 300B of FIG. 3B), session handler 126A causes user account session 146 to be established with respect to computing device 102B (e.g., as described with respect to step 314 of flowchart 300B of FIG. 3B) if the button has not been released (e.g., as determined in step 406). By requiring the user to continuously hold the button (e.g., from when stylus 104 is removed from contact with computing device 102A to when stylus 104 is in contact with computing device 102B), such embodiments improve security in authenticating a user account across multiple computing devices, since the user account of the user currently interacting with the first computing device has already been authenticated (and therefore is the same user holding the button between interaction with the different computing devices). Furthermore, since the user has already been authenticated with computing device 102A, by requiring the user to continuously hold the button, such embodiments utilize stylus 104 to attest authenticity of the user without requiring re-authentication of the user, thereby reducing the time taken and compute resources used to log a user into their user account across multiple devices.

In step 410, subsequent to detection of contact between the stylus and the second computing device, failure of establishment of the second session of the user account with respect to the second computing device is caused. For example, subsequent to contact detector 130 detecting contact between stylus 104 and computing device 102B (e.g., as described with respect to step 312 of flowchart 300B of FIG. 3B), session handler 126A (or an authenticating service receiving a session request from session handler 126A) causes a failure in establishing a user account session 146 with respect to computing device 102B if the button is released prior to said detection (e.g., as determined in step 406). By detecting if the button had been released and subsequently preventing establishment of a user account session in this manner, such embodiments improve security by preventing an unauthorized user from utilizing stylus 104 to access a user account. For instance, as a non-limiting example, suppose the user leaves releases the button and leaves stylus 104 on a desk. Further suppose, in this example, a second user picks up stylus 104 and interacts with their computing device (e.g., computing device 102B) to attempt to log into the first user's account. Since the first user released the button, an embodiment of stylus 104 that operates according to flowchart 400 of FIG. 4 prevents establishing user account session 146, thereby preventing the second user from accessing the first user's account.

Stylus 104 may operate in various ways to cause the failure in establishing user account session 146 with respect to computing device 102B, in embodiments. For instance, in accordance with an embodiment where stylus 104 maintains a token (e.g., token 212) representative of user account session 142, stylus 104 erases token 212 (or otherwise prevents token 212 from being released) if the button is released prior to detection. In this context, stylus 104 may re-obtain token 212 based on subsequent interaction between stylus 104 and computing device 102A, as described elsewhere herein. By erasing token 212 in this matter, stylus 104 prevents unauthorized access to token 212 if the user authenticated with respect to computing device 102A releases the button of stylus 104. In accordance with another embodiment, stylus 104 raises (or lowers) a flag (not shown in FIG. 2) if the user releases the button. In this context, the authenticating service or application 144 is configured to fail in establishing user account session 146 if the flag is raised (or lowered, in an alternative embodiment). By utilizing a flag to indicate whether or not the user has released the button, stylus 104 is not required to maintain token 212 or (if stylus 104 does maintain token 212) does not release token 212 if the flag is raised (or lowered in the alternative embodiment). This further improves security by reducing exposure of authentication tokens if stylus 104 is compromised.

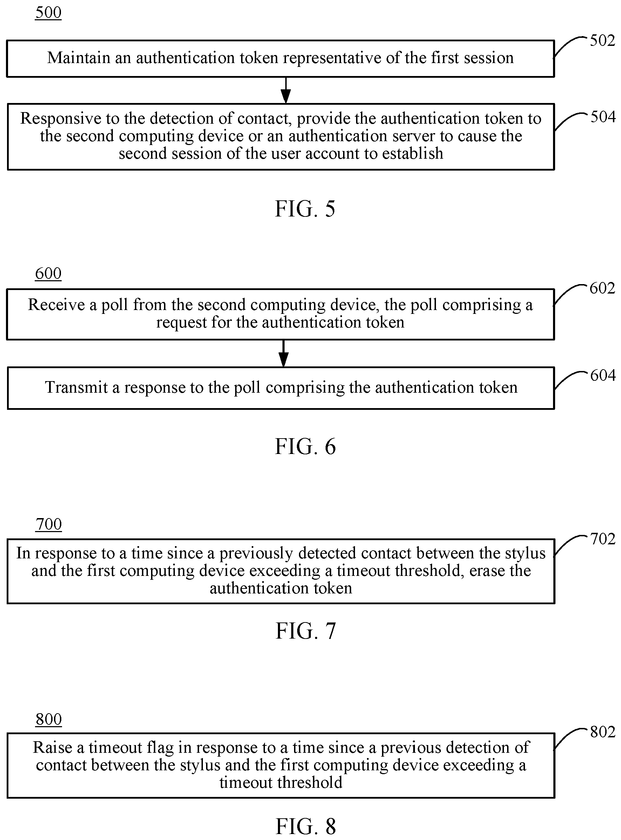

As discussed herein, session handler 126A may cause a user account session to establish in various ways, in embodiments. For example, FIG. 5 shows a flowchart 500 of a process for causing a session of a user account to establish, in accordance with an example embodiment. Session handler 126A of FIG. 2 may operate according to flowchart 500 in embodiments. Note not all steps of flowchart 500 need be performed in all embodiments. Further structural and operational embodiments will be apparent to persons skilled in the relevant art(s) based on the following description of FIG. 5 with respect to FIG. 2.

Flowchart 500 begins with step 502. In step 502, an authentication token representative of the first session is maintained. For example, session tracker 204 of FIG. 2 maintains token 212 representative of user account session 142. As described herein, token 212 may be used to attest authentication of the user interacting with stylus 104. In accordance with an embodiment, token 212 is an authentication token suitable for logging into a particular application (e.g., the back-end application associated with application 140 and 144). Alternatively, token 212 is a single sign-on (SSO) token suitable for logging into multiple (e.g., different) applications. In accordance with an embodiment session tracker 204 stores token 212 in a (e.g., secure) memory device of stylus 104. In accordance with an embodiment, token 212 is encrypted in a manner that prevents session tracker 204 from accessing a decrypted version of token 212.

In step 504, responsive to the detection of contact, the authentication token is provided to the second computing device or an authentication server to cause the second session of the user account to establish. For example, responsive to contact detector 130 of FIG. 2 detecting contact based on signal 230, session establisher 208 provides token 212 to computing device 102B or authentication server 106 of FIG. 1 to cause user account session 146 to establish. In embodiments where token 212 is provided to second computing device (e.g., for providing to a back-end component of application 144), session tracker 204 maintaining token 212 reduces network traffic between stylus 104 (or computing device(s) 102A and/or 102B on behalf of stylus 104) and authentication server 106, thereby reducing the time taken and compute resources used to log a user into their user account across multiple computing devices. Furthermore, by requiring detection of contact between stylus 104 and computing device 102B, some embodiments require use of stylus 104 as authentication of the user before token 212 may be released to cause user account session 146 to establish. For instance, in a multi-factor authentication embodiment, application 144 requires token 212 to establish user account session 146 and session establisher 208 requires detection of contact between stylus 104 and computing device 102B to release token 212, thereby improving security with respect to the user account.

In some embodiments, one or more steps in processes of stylus 104 are performed in response to polls received from a computing device. For example, a computing device (or an application executing thereon) may transmit a poll to stylus 104 that causes stylus 104 to provide a response thereto. For instance, a computing device may poll stylus 104 for credentials (e.g., token 212) to establish a user account session. In some embodiments, implementations of stylus 104 may be simplified, thereby reducing the cost of manufacturing (e.g., material cost, circuit complexity, and/or resources utilized to manufacture) stylus 104. For instance, logic for identifying a device (e.g., as described with respect to device identifier 206 of FIG. 2), for identifying a user or user account (e.g., as described with respect to user identifier of FIG. 2), for causing a session of a user account to establish (e.g., as described with respect to session establisher 208), and/or for performing other functions related to authenticating user accounts may be implemented in hardware and/or software of computing device(s) and/or associated applications. In embodiments, the poll transmitted to stylus 104 may include a request for information such as, but not limited to, sensor output of sensors 128, tokens maintained by session tracker 204 (e.g., token 212), flags raised or lowered by session tracker 204 (e.g., flag 210), and/or any other information associated with stylus 104 (e.g., a stylus ID that uniquely identifies stylus ID, IDs of devices stylus 104 has a communication channel established with, etc.) and/or maintained by stylus 104 (e.g., user accounts mapped to stylus 104, etc.).

As noted above (and elsewhere herein) stylus 104 may receive a poll from a computing device for credentials maintained by stylus 104 (e.g., token 212). Session handler 126A of FIG. 2 may operate in various ways to cause a user account session to be established based on the poll received from the computing device, in embodiments. For example, FIG. 6 shows a flowchart 600 of a process for providing an authentication token, in accordance with an example embodiment. Session handler 126A of FIG. 2 may operate according to flowchart 600 in embodiments. Note not all steps of flowchart 600 need be performed in all embodiments. Further structural and operational embodiments will be apparent to persons skilled in the relevant art(s) based on the following description of FIG. 6 with respect to FIG. 2.

Flowchart 600 begins with step 602. In step 602, a poll from the second computing device is received. The poll comprises a request for the authentication token. For example, session handler 126A receives a poll from computing device 102B for an authentication token to cause user account session 146 to be established. Depending on the implementation, the poll is included in signal 230 or a separate signal transmitted from computing device 102B to stylus 104 (e.g., via coupling 136B or wirelessly transmitted signal 138B). In accordance with an embodiment, computing device 102B transmits the poll to session handler 126A subsequent to user interaction with a log-in interface of application 144. Alternatively, computing device 102B automatically transmits the poll to session handler 126A (e.g., when application 144 is launched on computing device 102B, when contact is initiated between stylus 104 and computing device 102B, and/or in another scenario wherein computing device 102B would poll session handler 126A for an authentication token, as described elsewhere herein and/or as would otherwise be understood by a person ordinarily skilled in the relevant art(s) having benefit of this disclosure). In accordance with an embodiment, the poll comprises an application ID for application 144.

In step 604, a response to the poll comprising the authentication token is transmitted. For example, session establisher 208 transmits a session request 242 comprising token 212 to computing device 102B. In accordance with an embodiment, session establisher 208 releases the authentication token to computing device 102B subsequent to identifying the user associated with the user account (e.g., as described with respect to step 312 of FIG. 3B and the operation of FIG. 13). By providing the authentication token to computing device 102B to computing device 102B as a response to the poll received in step 604, session establisher 208 may be implemented in a simplified manner. For instance, session establisher 208 in accordance with an embodiment is implemented without an interface configured to communicate with an authentication server (or a background server of an application). In this context, the circuit complexity and cost to manufacture styluses including this version of session establisher 208 is reduced. Furthermore, the power consumed by session establisher 208 in this embodiment is also reduced, since a network communication with an authentication server (or a background server of an application) does not need to be maintained to obtain and/or cause user account sessions to be established. In accordance with an embodiment, step 604 is a further embodiment of step 314 of FIG. 3B.

As described herein, in some embodiments, session tracker 204 maintains an authentication token 212 that may be used to attest authenticity of the user interacting with stylus 104. In some embodiments, session tracker 204 is configured to erase (e.g., delete) token 212 subsequent to certain conditions. For instance, session tracker 204 may erase token 212 subsequent to a lifetime of token 212 expiring. Alternatively, session tracker 204 erases token 212 subsequent to a lack of user interaction with stylus 104. In these embodiments, by erasing token 212 subsequent to a condition being met (e.g., expiration of a token's lifetime and/or lack of user interaction for a predetermined time), such embodiments reduce the likelihood of unauthorized access to a user account utilizing stylus 104.

As noted above, session tracker 204 may erase token 212 subsequent to a lack of user interaction. Session tracker 204 may operate to erase token 212 subsequent to lack of user interaction in various ways, in embodiments. For example, FIG. 7 shows a flowchart 700 of a process for erasing an authentication token, in accordance with an example embodiment. Session tracker 204 of FIG. 2 may operate according to flowchart 700 in embodiments. Flowchart 700 need not be performed in all embodiments. Further structural and operational embodiments will be apparent to persons skilled in the relevant art(s) based on the following description of FIG. 7 with respect to FIG. 2.

Flowchart 700 comprises step 702. In step 702, in response to a time since a previously detected contact between the stylus and the first computing device exceeding a timeout threshold, the authentication token is erased. For example, session tracker 204 is configured to erase token 212 in response to a time since a previously detected contact between stylus 104 and computing device 102A exceeding a timeout threshold. By erasing authentication token 212 in this manner, embodiments of flowchart 700 reduce the possibility of unauthorized access to a user account (and associated resources) with respect to a computing device. For instance, if a first user stops using or misplaces stylus 104 and a second user obtains stylus 104 after the time has exceeded the timeout threshold, session tracker 204 operating according to flowchart 700 prevents the second user from being able to utilize stylus 104 to access the first user's accounts in other computing devices.

In some embodiments, stylus 104 does not maintain authentication token 212 or is not configured to erase authentication token 212 in the manner described with respect to flowchart 700 of FIG. 7. In these embodiments, session tracker 204 of FIG. 2 may be configured to raise a flag that prevents a user from utilizing stylus 104 to establish a user account session with respect to a computing device. Session tracker 204 may operate to raise such a flag in various ways, in embodiments. For example, FIG. 8 shows a flowchart 800 of a process for raising a timeout flag, in accordance with an example embodiment. Stylus 104 of FIG. 2 may operate according to flowchart 800 in embodiments. Note flowchart 800 need not be performed in all embodiments. Further structural and operational embodiments will be apparent to persons skilled in the relevant art(s) based on the following description of FIG. 8 with respect to FIG. 2.

Flowchart 800 comprises step 802. In step 802, a timeout flag is raised in response to a time since a previous detection of contact between the stylus and the first computing device exceeding a timeout threshold. For example, session tracker 204 raises flag 210 in response to a time since contact detector 130 previously detected contact between stylus 104 and computing device 102A exceeding a timeout threshold. If flag 210 is raised, session establisher 208 prevents user account sessions from being established. In accordance with an embodiment, flag 210 is cleared subsequent to session handler 126A re-authenticating the user account session with authentication server 106 of FIG. 1. By raising flag 210 in this manner, embodiments operating according to flowchart 800 reduce the data that has to be maintained by stylus 104 (e.g., token 212) while reducing the possibility of unauthorized access to a user account (and associated resources) with respect to a computing device. While FIG. 8 is described with respect to raising a flag that prevents establishment of user account sessions, it is also contemplated herein that embodiments of session handler 126A may be configured to lower a flag subsequent to the time exceeding a timeout threshold and raise the flag subsequent to re-authentication with authentication server 106.

### IV. Embodiments of Servers Comprising Session Handlers

As described herein, authentication server 106 of FIG. 1 in some embodiments includes a session handler 126B. Session handler 126B may be configured to track a session of a user account with respect to a computer device and/or establish a session of a user account to be established in various ways, in embodiments. For example, Fig. 9 shows a block diagram 900 of authentication server 106 comprising session handler 126B, in accordance with an example embodiment. As shown in FIG. 9, authentication server 106 comprises session handler 126B and authenticator service 132, as described with respect to FIG. 1. Session handler 126B is configured to perform functions similar to those described with respect to session handler 126A with the following described differences. As also shown in FIG. 9, session handler 126B comprises a user identifier 902, a session tracker 904, a contact evaluator 906, and a session establisher 908, each of which may be implemented as sub-services (e.g., software, firmware, etc.), sub-components (e.g., logic circuits, memory devices, processors, etc.), or a combination of sub-services and sub-components of session handler 126B. To better understand the operation of authentication server 106, FIG. 9 is described with respect to FIG. 10. FIG. 10 shows a flowchart 1000 of a process for authenticating a user account based on user interaction with a stylus, in accordance with an example embodiment. Authentication server 106 of FIG. 9 may operate according to flowchart 1000 in embodiments. Note not all steps of flowchart 1000 need be performed in all embodiments. Further structural and operational embodiments will be apparent to persons skilled in the relevant art(s) based on the following description of FIGS. 9 and 10.

Flowchart 1000 begins with step 1002. In step 1002, a first session of a user account with respect to a first computing device of multiple computing devices is tracked based on user interaction with a stylus. For example, session tracker 904 tracks user account session 142 with respect to computing device 102A based on user interaction with stylus 104. In accordance with an embodiment, session tracker 904 maintains a token 924 representative of user account session 142 in a similar manner to session tracker 204 maintaining token 212 of FIG. 2. In accordance with an embodiment, session tracker 904 raises or clears a flag 926 in response to a time since a previous detection of contact between the stylus and the first computing device exceeding a timeout threshold (e.g., in a similar manner to session tracker 204 raising or clearing flag 210, as described with respect to FIG. 8). In accordance with an embodiment, session tracker 904 maintains a mapping of tokens (such as token 924) to corresponding user account sessions.

In step 1004, an indication of contact between the stylus and a second computing device of the multiple computing devices is received. For example, contact evaluator 906 receives an indication 910 of contact between stylus 104 and second computing device 102B. In accordance with an embodiment, indication 910 is received over a network (e.g., network 148). Indication signal 910 comprises information such as, but not limited to, output of digitizer sensor 118B, output of sensors 128, a device ID of computing device 102B, an application ID of application 140, a user account ID associated with the user, and/or any other information suitable for determining whether or not to establish a user account session with computing device 102B. Contact evaluator 906 generates a detection signal 912 based on the indication 910. Detection signal 912 comprises information similar to indication signal 910.

In steps 1006, a second session of the user account is established with respect to the second computing device. For example, session establisher 908 establishes user account session 146 to be established with respect to computing device 102B. Session establisher 908 may operate to cause establishment of user account session 146 in various ways, in embodiments. For instance, session establisher 908 in accordance with an embodiment causes establishment of user account session 146 by obtaining token 924 from session tracker 904 via signal 920 and providing a session request 922 comprising obtained token 924 to computing device 102B or a back-end component of application 144 to cause user account session 146 to be established. In this way, session establisher 908 may attest the user is authenticated without requiring authenticator service 132 to re-authenticate the user, thereby reducing compute resources and time required to log into user account session 146.

In some embodiments, session handler 126B is configured to verify the characteristics of user interaction related to indication 910. For instance, user identifier 902 is configured to identify the user account in a similar manner to user identifier 202 of FIG. 2 (e.g., as described with respect to flowchart 300B of FIG. 3B). In this context, user identifier 902 generates a user identification signal 914. In this context, session establisher 908 does not release token 924 unless user identifier 902 verifies the characteristics in indication 910 are similar to the expected characteristics for the user of the user account. In this context, session establisher 208 causes user account session 146 to be established subsequent to receiving user identification signal 238. In this manner, establishment of user account session 146 (and optionally release of token 924) is prevented until user identifier 902 verifies the user currently interacting with stylus 104 is the same (or an otherwise authorized) user associated with the tracked user account session, thus preventing unauthorized access to the user's account with respect to computing device 102B.

In some embodiments, session establisher 908 determines re-authentication of the user account is required. In this case, session establisher 908 transmits an authentication request 916 to authenticator service 132. In this context, authentication request 916 comprises credentials for authenticating the user account (e.g., credentials obtained from computing device 102B or otherwise). Authenticator service 132 determines if the credentials are valid and, if so, provides authentication credentials 914 (e.g., token 924) to session tracker 904.

### V. Embodiments for Device Authentication

In some embodiments, a stylus and/or a session handler may determine whether or not a device is authorized to have a user account session. Embodiments of the present disclosure may be configured in various ways to determine whether or not a device is authorized for having a user account session. FIG. 11 shows a block diagram of a system 1100 for authenticating a device, in accordance with an example embodiment. As shown in FIG. 11, system 1100 comprises computing device 102A, computing device 102B, stylus 104 (comprising session tracker 126A (comprising session tracker 204 and device identifier 206), contact detector 130, and other components of stylus 104 not shown in FIG. 11 for brevity), and authentication server (optionally comprising session handler 126B), as described with respect to FIGS. 1 and 2. As also shown in FIG. 11, authentication server 106 comprises a device authenticator 1104, which is configured to determine whether or not a computing device is authentic (e.g., is authorized to establish a (e.g., particular) user account session). To better understand the operation of system 1100 and the authentication of devices, FIG. 11 is described with respect to FIG. 12. FIG. 12 shows a flowchart of a process for authenticating a device, in accordance with an example embodiment. System 1100 of FIG. 11 may operate according to flowchart 1200 in embodiments. Note not all steps of flowchart 1200 need be performed in all embodiments. Further structural and operational embodiments will be apparent to persons skilled in the relevant art(s) based on the following descriptions of FIGS. 11 and 12.

Flowchart 1200 begins with step 1202. In accordance with an embodiment step 1202 comprises one or more steps of flowcharts 300A or 300B, as described with respect to FIGS. 3A and 3B. For instance, with respect to FIG. 11, step 1202 includes contact detector 130 detecting contact between stylus 104 and computing device 102B based on signal 1104 (e.g., in a similar manner as described with respect to step 312 of flowchart 300B of FIG. 3B) and the generation of detection signal 1110. In accordance with an embodiment, step 1202 also comprises identification of computing device 102B by device identifier 206 (e.g., based on detection signal 1110).

In step 1204, a determination of whether a computing device is an authorized device is made. For example, device identifier 206 receives detection signal 1110 and determines whether computing device 102B is an authorized device. Device identifier 206 may operate in various ways to determine computing device 102B is authorized to establish user account session 146. For instance, device identifier 206 in FIG. 11 provides a device authentication request 1112 to device authenticator 1104. Device authenticator 1104 determines whether computing device 102B is an authorized device. For instance, if device authenticator 1104 determines if computing device 102B is included in a list of authorized devices, a list of devices with their credentials removed, a list of stolen devices, and/or any other list that may be used to determine whether or not a user account session should be established with respect to computing device 102B. If computing device 102B is an authorized device, device authenticator 1104 provides a response 1114 indicating computing device 102B is authorized and flowchart 1200 continues to step 1206. If computing device 102B is not an authorized device, device authenticator 1104 provides response 1114 indicating computing device 102B is not authorized and flowchart 1200 continues to step 1208.

In step 1206, the computing device is authorized for the session of the user account. For example, device identifier 206 of FIG. 11 receives response 1114 indicating computing device 102B is authorized and authorizes computing device 102B for user account session 146. For instance, device identifier 206 provides a detection signal 234 to user identifier 202 to authorize user identifier 202 to continue determining whether or not to establish user account session 146, as described with respect to flowchart 300B of FIG. 3B.

In step 1208, authorization of the computing device is denied for the session of the user account. For example, device identifier 206 of FIG. 11 receives response 1114 indicating computing device 102B is not authorized and denies authorization for computing device 102B for user account session 146. Depending on the implementation, device identifier 206 provides an indication that authorization of computing device 102B is denied. For instance, device identifier 206 in accordance with an embodiment provides an indication 1116A to session tracker 204. In some embodiments, session tracker 204 erases an authentication token in response to receiving indication 1116A. In accordance with another embodiment, device identifier 206 provides an indication 1116B to computing device 102B to cause a user interface of computing device 102B to indicate access was denied. In accordance with another embodiment, device identifier 206 provides an indication to a computing device a user account session is already established with (e.g., an indication 1116C to computing device 102A. In accordance with another embodiment, device identifier 206 provides an indication 116D to session handler 126B. In accordance with an embodiment, device identifier 206 (or session handler 126A subsequent to receiving indication 1116A) causes a stylus 104 to provide a (e.g., physical or visual) feedback indication to indicate authorization of computing device 102B is denied for user account session 146. Examples of such a feedback indication include, but are not limited to, a vibrating motor of stylus 104 (e.g., a haptic motor, not shown) to vibrate (e.g., for a single pulse, for a predetermined number of pulses, for a predetermined length of time, etc.), a light of stylus 104 (e.g., a light emitting diode (LED), not shown) to emit light (e.g., continuous light (e.g., for a predetermined time, until subsequent user interaction, etc.), one or more flashes of light, etc.), and/or any other type of feedback indication stylus 104 may be configured to provide in response to a denial of authorization of computing device 102B.

Embodiments of device identifier 206 configured for determining whether or not a computing device is authorized have been described with respect to FIG. 11 and FIG. 12. In some embodiments, device identifier 206 operates to determine whether a second computing device (e.g., computing device 102B) of the same user associated with a first computing device (e.g., computing device 102A) is an authorized device. However, embodiments described herein are not so limited. For instance, in accordance with an embodiment, computing device 102A and stylus 104 are associated with an administrative user (e.g., an information technology (IT) user, a manager, etc.) associated with an enterprise system. In this context, the administrative user may utilize stylus 104 to determine if other computing devices are authorized devices of the enterprise system. As a non-limiting example, suppose the admin user interacts with stylus 104 to cause stylus 104 to contact computing device 102B and contact detector 130 to generate detection signal 1110. In this context, device identifier 206 determines whether computing device 102B is an authorized device based on detection signal 1110 (e.g., in a manner similar to that described with respect to steps 1204-1208 of FIG. 12). For instance, device identifier 206 in this context may be configured to determine if computing device 102B is an enterprise device (e.g., a device of an organization the admin user is associated with), if a user account associated with computing device 102B had its credentials revoked, if computing device 102B has been reported stolen, and/or the like. For instance, suppose device authenticator 1104 of FIG. 11 in this example maintains a mapping of device IDs to statuses representing whether the device is an authorized device, a device that is no longer authorized for use as an enterprise device (e.g., either the device is considered compromised or the user account has had its credentials revoked), a stolen device, and/or the like. If the device is authorized, device identifier 206 operates in a manner similar to that described with respect to step 1206. Otherwise, device identifier 206 operates in a manner similar to that described with respect to step 1208. By determining if a computing device is authorized in this manner, stylus 104 improves security in enterprise systems by preventing authorization of (e.g., any) computing device for use in the enterprise system (e.g., with respect to enterprise user account sessions).

While device identifier 206 of FIG. 11 is described as causing or denying authorization of a computing device for a session of a user account, embodiments described herein are not so limited. For example, in an alternative embodiment an admin user is interacting with stylus 104 to determine authorization of computing device 102B, subsequent to the determination made in step 1204, device identifier 206 generates an authorized indication (that indicates the device is authorized) or an unauthorized indication (that indicates the device is not authorized) without subsequent establishment of a user account session with respect to a computing device. In other words, device identifier 206 may operate in accordance with an embodiment to test whether or not computing devices are authorized (e.g., without subsequent user account session establishment). In this context, stylus 104 improves security of enterprise systems by confirming a computing device is authorized (e.g., with respect to the enterprise system) and, if the device is not authorized, indicating to the admin user (and/or an admin computing device (e.g., computing device 102A) that the device is not authorized.

### VI. Embodiments for Identifying Users

As described herein, session handlers may be configured to identify a user based on user interaction with a stylus. For instance, a session handler may comprise a user identifier that is configured to identify the user based on detected contact between a stylus and a computing device, an identified computing device, and/or outputs of one or more sensors. User identifiers (such as user identifier 202 of FIG. 2 or user identifier 902 of FIG. 9) may be configured in various ways to identify users, identify user accounts, or identify characteristics thereof. For example, FIG. 13 shows a block diagram of a system 1300 for identifying a user account, in accordance with an example embodiment. System 1300 comprises a user identifier 1302, a storage 1316, a grip sensor 1320, an accelerometer 1322, and a gyroscope 1324. Storage 1316 stores data used by and/or generated by computing devices (e.g., computing devices 102A and/or 102B of FIG. 1), styluses (e.g., stylus 104 of FIG. 1), and/or authentication servers (e.g., authentication server 106 of FIG. 1). For instance, as shown in FIG. 13, storage 1316 stores one or more user profile(s) 1318 ("user profiles 1318" herein). As shown in FIG. 1, storage 1316 is an external storage (e.g., accessible over a network such as network 148); however, it is also contemplated herein that some or all of storage 1316 may be internal to a computing device (e.g., computing device 102A and/or computing device 102B of FIG. 1), a stylus (e.g., stylus 104 of FIG. 1), and/or a server (e.g., authentication server 106 of FIG. 1).

Each user profile of user profiles 1318 comprises one or more user account IDs (e.g., IDs that uniquely identify user accounts corresponding to the user profile) and historic characteristics for the user. For instance, a user profile may comprise information related to where a user typically grips a stylus, how tightly a user typically holds a stylus, the movement of the stylus as the user utilizes the stylus. In some embodiments, user profiles 1318 are pre-generated. Alternatively, and as described further with respect to user identifier 1302, user profiles of user profiles 1318 are generated based user characteristics over time.

Grip sensor 1320, accelerometer 1322, and gyroscope 1324 are further examples of sensors 128, as described with respect to FIG. 1. Each of grip sensor 1320, accelerometer 1322, and gyroscope 1324 are incorporated in stylus 104 of FIG. 1. Grip sensor 1320 comprises one or more touch sensors and/or pressure sensors configured to output respective grip signal(s) 1326 ("grip signal 1326" herein). Touch sensors of grip sensor 1320 are configured to detect where a user's fingers or palm(s) are in contact with stylus 104 of FIG. 1. Pressure sensors of grip sensor 1320 are configured to detect how tightly a user grips stylus 104. Sensors of grip sensor 1320 may be distributed across a surface of stylus 104. In accordance with an embodiment, a touch sensor of grip sensor 1320 comprises a capacitive linear position sensor along a plane of sensor 1320. Accelerometer 1322 is configured to measure the acceleration of stylus 104 and output acceleration signal 1328. Gyroscope 1324 is configured to measure the angular velocity of stylus 104 and output angular velocity signal 1330. In accordance with an embodiment, grip sensor 1320, accelerometer 1322, and/or gyroscope 1324 are configured to provide output signals representative of their respective measurements to user identifier 1302.

User identifier 1302 is a further example of user identifier 202 of FIG. 2 or user identifier 902 of FIG. 9. As shown in FIG. 13, user identifier 1302 comprises a posture analyzer 1304, a contact analyzer 1306, an inertial measurement analyzer 1308, a user profile generator 1310, and a user profile analyzer 1312, each of which are sub-components of user identifier 1302. Posture analyzer 1304 is configured to analyze grip signal 1326 output by grip sensor 1320 to determine a user's posture with respect to stylus 104 of FIG. 1. For instance, posture analyzer 1304 receives grip signal 1326 representative of how a user is holding stylus 104 (e.g., touch sensors the user is in contact with, the level of pressure the user is holding the stylus with, etc.). In this manner, posture analyzer 1304 determines the location of a user's finger(s) around a stylus, the location of a user's finger(s) along the stylus (e.g., close to the tip, halfway up the stylus, etc.), whether or not the user's palm is touching the stylus, where the user's palm is touching the stylus, whether the user is holding the stylus with their right hand or their left hand, how tightly the user is gripping the stylus, and/or any other information related to the user's posture with respect to stylus 104 that may be derived by analyzing grip signal (or signals) 1326. As shown in FIG. 13, posture 1304 generates a posture signal 1332 that includes results of the analysis performed by posture analyzer 1304.

Contact analyzer 1306 is configured to analyze signals associated with detected contact between a stylus and a computing device ("detected contact 1314" in FIG. 13). In accordance with an embodiment wherein user identifier 1302 is incorporated in stylus 104, contact analyzer 1306 analyzes detection signals (e.g., detection signal 216, detection signal 232, detection signal 1110, and/or the like). In accordance with an embodiment where user identifier 1302 is incorporated in an authentication server, contact analyzer 1306 analyzes contact signal 912. In embodiments, detected contact 1314 (e.g., a detection signal or a contact signal) comprises information related to the position of stylus 104 relative to a touch surface of a computing device, information related to an interaction of stylus 104 with a computing device (e.g., to cause an application to execute, to cause a selection to be made, to cause ink to be drawn, to cause ink to be erased, etc.), a type of communication channel between stylus 104 and the computing device, and/or any other information related to contact detected between stylus 104 and a computing device, as described elsewhere herein. For example, contact analyzer 1306 in accordance with an embodiment analyzes detected contact 1314 and determines a velocity of the tip of stylus 104 across a touch surface of a computing device. In accordance with another embodiment, contact analyzer 1306 analyzes detected contact 1314 to determine an application the user interaction is associated with (e.g., an application a user is attempting to log into). As shown in FIG. 13, contact analyzer 1306 generates a contact signal 1334 comprising results of contact analyzer 1306's analysis.

Inertial measurement analyzer 1308 is configured to analyze output of accelerometer 1322 (e.g., acceleration signal 1328) and gyroscope 1324 (e.g., angular velocity signal 1330) and generate a measurement signal 1336 representative of movement of stylus 104. While inertial measurement analyzer 1308 is shown in FIG. 13 as a separate component from accelerometer 1322 and gyroscope 1324, it is also contemplated herein that inertial measurement analyzer 1308, accelerometer 1322, and/or gyroscope 1324 may be incorporated in a single component, such as an inertial measurement unit (IMU). The IMU may be a sub-component of user identifier 1302 or external from user identifier 1302.

User profile generator 1310 is configured to generate a user profile based on respective outputs of posture analyzer 1304 (e.g., posture signal 1332), contact analyzer 1306 (e.g., contact signal 1334), and inertial measurement analyzer 1308 (e.g., measurement signal 1336). In accordance with an embodiment, user profile generator 1310 operates in a "training" mode where a user has already been authenticated and user profile generator 1310 generates an (e.g., initial) user profile 1338 for the user based on outputs of posture analyzer 1304, contact analyzer 1306, and/or inertial measurement analyzer 1308. In this context, user profile generator 1310 learns a user's typical grip of a stylus, how the user typically moves the stylus when performing certain actions (e.g., when drawing, when writing, when signing a signature, etc.) with respect to a computing device, and/or any other patterns or other characteristics of the user's interaction with a stylus. As shown in FIG. 13, user profile generator 1310 stores user profile 1338 in user profiles 1318. In accordance with a training embodiment, user profile 1338 is a new user profile. In accordance with another training embodiment, user profile 1338 is used to update an existing profile in user profiles 1318. In this context, user profiles may (e.g., continuously) be updated to learn changes in how a user interacts with a stylus and/or to reinforce existing patterns in how a user interacts with a stylus. In accordance with an embodiment, user profile 1338 comprises a user ID that uniquely identifies the user (e.g., across multiple user accounts) or a user account ID that uniquely identifies the user account corresponding to the generated profile. In this way, user profiles generated by user profile generator 1310 and stored by storage 1316 may be mapped to a particular user ID or user account ID for further analysis thereof.

In accordance with an embodiment, user profile generator 1310 operates in an "evaluation" mode. In this context, the user has not been authenticated for a particular interaction (e.g., the user interaction corresponds to detected contact between a stylus and a computing device the user desires to establish a session of the user account with). User profile generator 1310 operating in "evaluation" mode generates a user profile 1340 representative of the current user interaction with the stylus (i.e., based on analysis by one or more of posture analyzer 1304, contact analyzer 1306, and/or inertial measurement analyzer 1308). In accordance with an embodiment, user profile 1340 comprises a user ID or a user account ID associated with an account the user is attempting to access. User profile 1340 is provided to user profile analyzer 1312 for analysis thereof.

User profile analyzer 1312 is configured to analyze a user profile for a (e.g., current) user interaction with a stylus and determine if it matches an existing user profile of user profiles 1318. User profile analyzer 1312 may operate in various ways to analyze user profiles generated by user profile generator 1310. For example, suppose a user is attempting to log into a user account (e.g., an account not currently tracked by a session handler) in a manner similar to that described with respect to flowchart 300A of FIG. 3A. In this context, user profile analyzer 1312 receives user profile 1340 and compares user profile 1340 to multiple (e.g., each, a subset of, etc.) user profiles of user profiles 1318 (e.g., by obtaining profiles of user profiles 1318 via signal 1342) (or otherwise analyzes user profile 1340 with respect to multiple user profiles of user profiles 1318). If user profile analyzer 1312 determines user profile 1340 matches an existing user profile, user identifier 1302 indicates the matched user profile to a session establisher (e.g., by including a user account ID associated with the user profile in a user identification signal). In this context, session establisher 208 may request a session be established based on the user profile indicated by user identifier 1302. By identifying a user account in this manner, a session handler may request a session of a user account be established without requiring the user to present a user account ID (e.g., since the user account ID may be stored with the pre-existing profile).

As noted above, user profile analyzer 1312 may operate in various ways to analyze user profiles generated by user profile generator 1310. For example, suppose a user is attempting to log into a user account (e.g., across multiple computing devices) in a manner similar to that described with respect to flowchart 300B of FIG. 3B. In this context, user profile analyzer 1312 receives user profile 1340 and a user account ID that corresponds to the account the user is attempting to log into. User profile analyzer 1312 obtains an existing user profile for the user account from user profiles 1318 via signal 1342 based on the user account ID. User profile analyzer 1312 compares user profile 1340 to the obtained user profile (or otherwise analyzes user profile 1340 with respect to the obtained user profile) to determine whether or not user profile 1340 matches (e.g., within a predetermined threshold) the obtained user profile. If so, user profile analyzer 1312 authorizes a session of the user account to be established. Otherwise, user profile analyzer 1312 denies establishment of the session of the user account.

User profile analyzer 1312 may determine user profile 1340 matches an existing user profile in various ways, in embodiments. For instance, user profile analyzer 1312 in accordance with an embodiment evaluates characteristics of a user's posture, measurement analysis performed by inertial measurement analyzer 1308, and/or analysis of contact made by contact analyzer 1306 for user profile 1340 with respect to one or more existing profiles of user profiles 1318. In accordance with an embodiment, user profile analyzer 1312 determines a level of similarity between user profile 1340 and one or more existing profiles of user profiles 1318. In a further embodiment, user profile analyzer 1312 determines if a level of similarity between user profile 1340 and an existing profile satisfies a similarity threshold. The level of similarity may be determined based on an aggregated weighted confidence for a parameter (e.g., where a finger is placed on a stylus versus past placements of fingers) and/or a pass/fail (e.g., whether the user is gripping the stylus with their right or left hand). In some embodiments, the threshold for the level of similarity is based on a combination of parameters. In some embodiments, the evaluated characteristics are derived from a minimum number of frames passing a level of similarity threshold. For instance, suppose a user is attempting to access an account associated with a profile "Profile A." In this context, if a level of similarity between user profile 1340 and Profile A satisfies a similarity threshold, user profile analyzer 1312 authorizes a session of an associated user account to be established. Otherwise, user profile analyzer 1312 denies authorization for establishing a session of the associated user account. By analyzing user profiles in this way, user identifier 1302 enables a user to seamlessly authenticate across multiple computing devices (e.g., as described with respect to flowchart 300B) while preventing (or reducing the possibility of) a different user from impersonating the first user (e.g., by obtaining or otherwise using stylus 104) to access the first user's account.

### VII. Example Stylus and Computing Device Implementation

As described above, session handlers may operate and be configured in various ways to perform their described functions. For instance, a session handler may be configured to track a session of a user account with respect to a touch screen device based on user interaction with a stylus. Touch screen devices may be implemented in various ways, in embodiments. For example, FIG. 14 shows a block diagram of a system 1400 comprising a stylus 1406 and a computing device 1402, in accordance with an example embodiment. Stylus 1406 is a further example of stylus 104 and computing device 1402 is a further example of computing device 102A and/or 102B, as respectively described with respect to FIG. 1. As shown in FIG. 14, computing device 1402 includes a touch surface 1404 (which is a further embodiment of touch surface 110A or 110B) and stylus 1406 comprises a tip 1408, a button 1410, a touch sensor 1412, and internal circuits 1414 (represented by dotted lines). Button 1410 and touch sensor 1412 are further embodiments of sensors 128 of FIG. 1. Internal circuits 1414 include hardware configured to perform functions of and/or to execute software or firmware to perform functions of battery 120, processor 122, transceivers 124, session handler 126A, and/or contact detector 130 as described with respect to FIG. 1, as well as any subcomponents thereof described elsewhere herein. Further structural and operation examples will be apparent to persons skilled in the relevant art(s) based on the following description of FIG. 14.

As noted above, computing device 1402 is a further embodiment of computing device 102A or computing device 102B of FIG. 1. Touch surface 1404 generally includes multiple antennas (e.g., of digitizer sensor 118A or digitizer sensor 118B) and a digitizer signal processing component (e.g., digitizer signal processing component 112A or digitizer signal processing component 112B) for detecting touch input from a finger or digital pen (e.g., stylus 1406). Digitizers may operate in various ways. For example, digitizers in the touch screen panels of mobile devices such as smart phones and tablets generally operate in a capacitive multi-touch mode using capacitive sensors. One such type of sensor is called a 'mutual capacitive' sensor that is typically formed as a matrix of antennas including transparent conductive material (e.g., Indium Tin Oxide (ITO)) arranged in parallel rows and columns, with a capacitor node created where the rows and columns overlap, deposited in layers over the top of the active pixel layers (e.g., LED, OLED or LCD layers) of a touch sensitive display. Other types of touch sensors, however, may be employed in embodiments. For example, so-called "metal mesh" sensors may be formed using copper, colloidal silver, or other suitable materials instead of ITO. Likewise, touch sensors may be incorporated directly into the electrode structures of an LCD layer ("in-cell touch panel").

Touching the surface of touch surface 1404 with a finger or other conductive object induces a change in the charge storage capacity, and hence capacitance, of the capacitor nodes (i.e., overlapping layers) in the vicinity of the touch. Each capacitive node is associated with one or more pixels of the display screen that are immediately below the contact point on the screen. The change in capacitance of the capacitor nodes may be detected to determine touch location of the finger or conductive object on the touch sensitive display. The capacitance change may be detected by rapidly sampling each node by any of a variety of techniques as is known in the art.

It should be understood that although embodiments of computing device 1402 described herein may be described in terms of capacitive touch sensors and/or TFT LCD displays, embodiments may be implemented using any suitable touch panel technology, including transparent touch technologies such as capacitance touch and projected capacitance touch (including in-cell, sensor on lens, on-cell, and other variations), and even some forms of resistive touch technologies. The underlying display can be of any type, including any type of transmissive display such as an LCD, emissive displays such as LED, microLED, and/or OLED, as well as reflective displays based on, for example, electronic paper. Furthermore, while direct touch between stylus 1408 and touch surface 1404 is described with respect to computing device 1402, other forms of contact between tip 1408 of stylus 1406 and touch surface 1404 may be detected and/or otherwise used to perform functions of computing device 1402 and/or stylus 1406, as described elsewhere herein.

### VIII. Example Computer System Implementation

As noted herein, the embodiments described, along with any circuits, components and/or subcomponents thereof, as well as the flowcharts/flow diagrams described herein, including portions thereof, and/or other embodiments, may be implemented in hardware, or hardware with any combination of software and/or firmware, including being implemented as computer program code configured to be executed in one or more processors and stored in a computer readable storage medium, or being implemented as hardware logic/electrical circuitry, such as being implemented together in a system-on-chip (SoC), a field programmable gate array (FPGA), and/or an application specific integrated circuit (ASIC). A SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

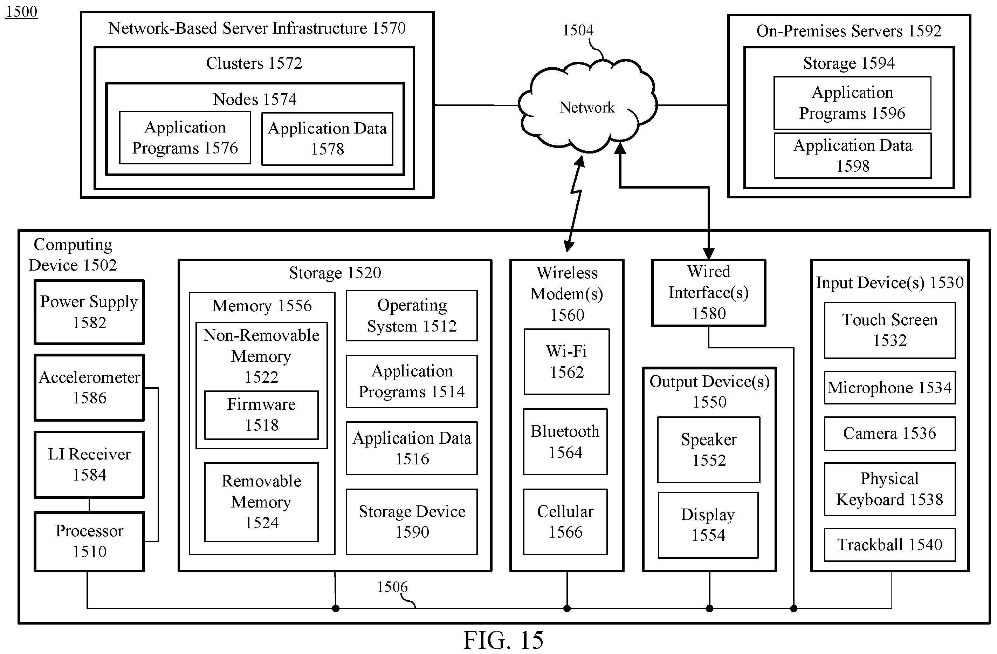

Embodiments disclosed herein may be implemented in one or more computing devices that may be mobile (a mobile device) and/or stationary (a stationary device) and may include any combination of the features of such mobile and stationary computing devices. Examples of computing devices in which embodiments may be implemented are described as follows with respect to FIG. 15. FIG. 15 shows a block diagram of an exemplary computing environment 1500 that includes a computing device 1502. Computing device 1502 is an example of computing device 102A, computing device 102B, stylus 104, and/or authentication server 106 in FIG. 1 and/or computing device 1402 and/or stylus 1406 of FIG. 14, which may each include one or more of the components of computing device 1502. In some embodiments, computing device 1502 is communicatively coupled with devices (not shown in FIG. 15) external to computing environment 1500 via network 1504. Network 1504 comprises one or more networks such as local area networks (LANs), wide area networks (WANs), enterprise networks, the Internet, etc., and may include one or more wired and/or wireless portions. Network 1504 may additionally or alternatively include a cellular network for cellular communications. Computing device 1502 is described in detail as follows.

Computing device 1502 can be any of a variety of types of computing devices. For example, computing device 1502 may be a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. Computing device 1502 may alternatively be a stationary computing device such as a desktop computer, a personal computer (PC), a stationary server device, a minicomputer, a mainframe, a supercomputer, etc.

As shown in FIG. 15, computing device 1502 includes a variety of hardware and software components, including a processor 1510, a storage 1520, one or more input devices 1530, one or more output devices 1550, one or more wireless modems 1560, one or more wired interfaces 1580, a power supply 1582, a location information (LI) receiver 1584, and an accelerometer 1586. Storage 1520 includes memory 1556, which includes non-removable memory 1522 and removable memory 1524, and a storage device 1590. Storage 1520 also stores an operating system 1512, application programs 1514, and application data 1516. Wireless modem(s) 1560 include a Wi-Fi modem 1562, a Bluetooth modem 1564, and a cellular modem 1566. Output device(s) 1550 includes a speaker 1552 and a display 1554. Input device(s) 1530 includes a touch screen 1532, a microphone 1534, a camera 1536, a physical keyboard 1538, and a trackball 1540. Not all components of computing device 1502 shown in FIG. 15 are present in all embodiments, additional components not shown may be present, and any combination of the components may be present in a particular embodiment. These components of computing device 1502 are described as follows.

A single processor 1510 (e.g., central processing unit (CPU), microcontroller, a microprocessor, signal processor, ASIC (application specific integrated circuit), and/or other physical hardware processor circuit) or multiple processors 1510 may be present in computing device 1502 for performing such tasks as program execution, signal coding, data processing, input/output processing, power control, and/or other functions. Processor 1510 may be a single-core or multi-core processor, and each processor core may be single-threaded or multithreaded (to provide multiple threads of execution concurrently). Processor 1510 is configured to execute program code stored in a computer readable medium, such as program code of operating system 1512 and application programs 1514 stored in storage 1520. The program code is structured to cause processor 1510 to perform operations, including the processes/methods disclosed herein. Operating system 1512 controls the allocation and usage of the components of computing device 1502 and provides support for one or more application programs 1514 (also referred to as "applications" or "apps"). Application programs 1514 may include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. Processor(s) 1510 may include one or more general processors (e.g., CPUs) configured with or coupled to one or more hardware accelerators, such as one or more NPUs and/or one or more GPUs.

Any component in computing device 1502 can communicate with any other component according to function, although not all connections are shown for ease of illustration. For instance, as shown in FIG. 15, bus 1506 is a multiple signal line communication medium (e.g., conductive traces in silicon, metal traces along a motherboard, wires, etc.) that may be present to communicatively couple processor 1510 to various other components of computing device 1502, although in other embodiments, an alternative bus, further buses, and/or one or more individual signal lines may be present to communicatively couple components. Bus 1506 represents one or more of any of several types of bus structures, including a memory bus or memory controller, a peripheral bus, an accelerated graphics port, and a processor or local bus using any of a variety of bus architectures.

Storage 1520 is physical storage that includes one or both of memory 1556 and storage device 1590, which store operating system 1512, application programs 1514, and application data 1516 according to any distribution. Non-removable memory 1522 includes one or more of RAM (random access memory), ROM (read only memory), flash memory, a solid-state drive (SSD), a hard disk drive (e.g., a disk drive for reading from and writing to a hard disk), and/or other physical memory device type. Non-removable memory 1522 may include main memory and may be separate from or fabricated in a same integrated circuit as processor 1510. As shown in FIG. 15, non-removable memory 1522 stores firmware 1518, which may be present to provide low-level control of hardware. Examples of firmware 1518 include BIOS (Basic Input/Output System, such as on personal computers) and boot firmware (e.g., on smart phones). Removable memory 1524 may be inserted into a receptacle of or otherwise coupled to computing device 1502 and can be removed by a user from computing device 1502. Removable memory 1524 can include any suitable removable memory device type, including an SD (Secure Digital) card, a Subscriber Identity Module (SIM) card, which is well known in GSM (Global System for Mobile Communications) communication systems, and/or other removable physical memory device type. One or more of storage device 1590 may be present that are internal and/or external to a housing of computing device 1502 and may or may not be removable. Examples of storage device 1590 include a hard disk drive, a SSD, a thumb drive (e.g., a USB (Universal Serial Bus) flash drive), or other physical storage device.

One or more programs may be stored in storage 1520. Such programs include operating system 1512, one or more application programs 1514, and other program modules and program data. Examples of such application programs may include, for example, computer program logic (e.g., computer program code/instructions) for implementing digital signal processing component 112A, digital signal processing component 112B, session handler 126A, session handler 126B, contact detector 130, authenticator service 132, application 140, application 144, user identifier 202, session tracker 204, device identifier 206, session establisher 208, user identifier 902, session tracker 904, contact evaluator 906, session establisher 908, device authenticator 1104, user identifier 1302, posture analyzer 1304, contact analyzer 1306, inertial measurement analyzer 1308, user profile generator 1310, and/or user profile analyzer 1312, as well as any of flowcharts or interaction diagrams 300A, 300B, 400, 500, 600, 700, 800, 1000, 1200, and/or any individual steps thereof.

Storage 1520 also stores data used and/or generated by operating system 1512 and application programs 1514 as application data 1516. Examples of application data 1516 include web pages, text, images, tables, sound files, video data, and other data, which may also be sent to and/or received from one or more network servers or other devices via one or more wired or wireless networks. Storage 1520 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

A user may enter commands and information into computing device 1502 through one or more input devices 1530 and may receive information from computing device 1502 through one or more output devices 1550. Input device(s) 1530 may include one or more of touch screen 1532, microphone 1534, camera 1536, physical keyboard 1538 and/or trackball 1540 and output device(s) 1550 may include one or more of speaker 652 and display 1554. Each of input device(s) 1530 and output device(s) 1550 may be integral to computing device 1502 (e.g., built into a housing of computing device 1502) or external to computing device 1502 (e.g., communicatively coupled wired or wirelessly to computing device 1502 via wired interface(s) 1580 and/or wireless modem(s) 1560). Further input devices 1530 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 1554 may display information, as well as operating as touch screen 1532 by receiving user commands and/or other information (e.g., by touch, finger gestures, virtual keyboard, etc.) as a user interface. Any number of each type of input device(s) 1530 and output device(s) 1550 may be present, including multiple microphones 1534, multiple cameras 1536, multiple speakers 1552, and/or multiple displays 1554.

One or more wireless modems 1560 can be coupled to antenna(s) (not shown) of computing device 1502 and can support two-way communications between processor 1510 and devices external to computing device 1502 through network 1504, as would be understood to persons skilled in the relevant art(s). Wireless modem 1560 is shown generically and can include a cellular modem 1566 for communicating with one or more cellular networks, such as a GSM network for data and voice communications within a single cellular network, between cellular networks, or between the mobile device and a public switched telephone network (PSTN). Wireless modem 1560 may also or alternatively include other radio-based modem types, such as a Bluetooth modem 1564 (also referred to as a "Bluetooth device") and/or Wi-Fi modem 1562 (also referred to as an "wireless adaptor"). Wi-Fi modem 1562 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 1564 is configured to communicate with another Bluetooth-capable device according to the Bluetooth short-range wireless technology standard(s) such as IEEE 802.15.1 and/or managed by the Bluetooth Special Interest Group (SIG).

Computing device 1502 can further include power supply 1582, LI receiver 1584, accelerometer 1586, and/or one or more wired interfaces 1580. Example wired interfaces 1580 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 1580 of computing device 1502 provide for wired connections between computing device 1502 and network 1504, or between computing device 1502 and one or more devices/peripherals when such devices/peripherals are external to computing device 1502 (e.g., a pointing device, display 1554, speaker 1552, camera 1536, physical keyboard 1538, etc.). Power supply 1582 is configured to supply power to each of the components of computing device 1502 and may receive power from a battery internal to computing device 1502, and/or from a power cord plugged into a power port of computing device 1502 (e.g., a USB port, an A/C power port). LI receiver 1584 may be used for location determination of computing device 1502 and may include a satellite navigation receiver such as a Global Positioning System (GPS) receiver or may include other type of location determiner configured to determine location of computing device 1502 based on received information (e.g., using cell tower triangulation, etc.). Accelerometer 1586 may be present to determine an orientation of computing device 1502.

Note that the illustrated components of computing device 1502 are not required or all-inclusive, and fewer or greater numbers of components may be present as would be recognized by one skilled in the art. For example, computing device 1502 may also include one or more of a gyroscope, barometer, proximity sensor, ambient light sensor, digital compass, etc. Processor 1510 and memory 1556 may be co-located in a same semiconductor device package, such as being included together in an integrated circuit chip, FPGA, or system-on-chip (SOC), optionally along with further components of computing device 1502.

In embodiments, computing device 1502 is configured to implement any of the above-described features of flowcharts herein. Computer program logic for performing any of the operations, steps, and/or functions described herein may be stored in storage 1520 and executed by processor 1510.

In some embodiments, server infrastructure 1570 may be present in computing environment 1500 and may be communicatively coupled with computing device 1502 via network 1504. Server infrastructure 1570, when present, may be a network-accessible server set (e.g., a cloud-based environment or platform). As shown in FIG. 15, server infrastructure 1570 includes clusters 1572. Each of clusters 1572 may comprise a group of one or more compute nodes and/or a group of one or more storage nodes. For example, as shown in FIG. 15, cluster 1572 includes nodes 1574. Each of nodes 1574 are accessible via network 1504 (e.g., in a "cloud-based" embodiment) to build, deploy, and manage applications and services. Any of nodes 1574 may be a storage node that comprises a plurality of physical storage disks, SSDs, and/or other physical storage devices that are accessible via network 1504 and are configured to store data associated with the applications and services managed by nodes 1574. For example, as shown in FIG. 15, nodes 1574 may store application data 1578.

Each of nodes 1574 may, as a compute node, comprise one or more server computers, server systems, and/or computing devices. For instance, a node 1574 may include one or more of the components of computing device 1502 disclosed herein. Each of nodes 1574 may be configured to execute one or more software applications (or "applications") and/or services and/or manage hardware resources (e.g., processors, memory, etc.), which may be utilized by users (e.g., customers) of the network-accessible server set. For example, as shown in FIG. 15, nodes 1574 may operate application programs 1576. In an implementation, a node of nodes 1574 may operate or comprise one or more virtual machines, with each virtual machine emulating a system architecture (e.g., an operating system), in an isolated manner, upon which applications such as application programs 1576 may be executed.

In an embodiment, one or more of clusters 1572 may be co-located (e.g., housed in one or more nearby buildings with associated components such as backup power supplies, redundant data communications, environmental controls, etc.) to form a datacenter, or may be arranged in other manners. Accordingly, in an embodiment, one or more of clusters 1572 may be a datacenter in a distributed collection of datacenters. In embodiments, exemplary computing environment 1500 comprises part of a cloud-based platform.

In an embodiment, computing device 1502 may access application programs 1576 for execution in any manner, such as by a client application and/or a browser at computing device 1502.

For purposes of network (e.g., cloud) backup and data security, computing device 1502 may additionally and/or alternatively synchronize copies of application programs 1514 and/or application data 1516 to be stored at network-based server infrastructure 1570 as application programs 1576 and/or application data 1578. For instance, operating system 1512 and/or application programs 1514 may include a file hosting service client configured to synchronize applications and/or data stored in storage 1520 at network-based server infrastructure 1570.

In some embodiments, on-premises servers 1592 may be present in computing environment 1500 and may be communicatively coupled with computing device 1502 via network 1504. On-premises servers 1592, when present, are hosted within an organization's infrastructure and, in many cases, physically onsite of a facility of that organization. On-premises servers 1592 are controlled, administered, and maintained by IT (Information Technology) personnel of the organization or an IT partner to the organization. Application data 1598 may be shared by on-premises servers 1592 between computing devices of the organization, including computing device 1502 (when part of an organization) through a local network of the organization, and/or through further networks accessible to the organization (including the Internet). Furthermore, on-premises servers 1592 may serve applications such as application programs 1596 to the computing devices of the organization, including computing device 1502. Accordingly, on-premises servers 1592 may include storage 1594 (which includes one or more physical storage devices such as storage disks and/or SSDs) for storage of application programs 1596 and application data 1598 and may include one or more processors for execution of application programs 1596. Still further, computing device 1502 may be configured to synchronize copies of application programs 1514 and/or application data 1516 for backup storage at on-premises servers 1592 as application programs 1596 and/or application data 1598.

Embodiments described herein may be implemented in one or more of computing device 1502, network-based server infrastructure 1570, and on-premises servers 1592. For example, in some embodiments, computing device 1502 may be used to implement systems, clients, or devices, or components/subcomponents thereof, disclosed elsewhere herein. In other embodiments, a combination of computing device 1502, network-based server infrastructure 1570, and/or on-premises servers 1592 may be used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 1520. Such computer-readable media and/or storage media are distinguished from and non-overlapping with communication media and propagating signals (do not include communication media and propagating signals). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 1514) may be stored in storage 1520. Such computer programs may also be received via wired interface(s) 1580 and/or wireless modem(s) 1560 over network 1504. Such computer programs, when executed or loaded by an application, enable computing device 1502 to implement features of embodiments discussed herein. Accordingly, such computer programs represent controllers of the computing device 1502.

Embodiments are also directed to computer program products comprising computer code or instructions stored on any computer-readable medium or computer-readable storage medium. Such computer program products include the physical storage of storage 1520 as well as further physical storage types.

### IX. Additional Exemplary Embodiments

A stylus is described herein. The stylus is configured to authenticate a user account across multiple computing devices. The stylus comprises a sensor and a session handler. The sensor is configured to detect contact between the stylus and computing devices of the multiple computing devices. The session handler component is configured to: track a first session of the user account with respect to a first computing device of the multiple computing devices based on user interaction with the stylus, and subsequent to detection of contact between the stylus and a second computing device of the multiple computing devices by the sensor, cause a second session of the user account with respect to the second computing device to be established.

In an implementation of the foregoing stylus, the second session of the user account is established based on an identifier of the stylus.

In an implementation of the foregoing stylus, to track the first session, the session handler component is configured to detect a button of the stylus is pressed; and in response to the button being released prior to detection of contact between the stylus and the second computing device, the session handler component is further configured to cause the second session of the user account to fail to establish.

In an implementation of the foregoing stylus, the session handler component is further configured to: maintain an authentication token representative of the first session; and responsive to the detection of contact, provide the authentication token to the second computing device or an authentication server to cause the second session of the user account to establish.

In an implementation of the foregoing stylus, to provide the authentication token to the second computing device, the session handler component is further configured to: receive a poll from the second computing device, the poll comprising a request for the authentication token; and transmit a response to the poll comprising the authentication token.

In an implementation of the foregoing stylus, the session handler is further configured to erase the authentication token in response to a time since the sensor previously detected contact between the stylus and the first computing device exceeding a timeout threshold.

In an implementation of the foregoing stylus, the session handler is further configured to raise a timeout flag in response to a time since the sensor previously detected contact between the stylus and the first computing device exceeding a timeout threshold, the timeout flag preventing sessions of a user account from being established with a new computing device.

In an implementation of the foregoing stylus, the session handler is further configured to, responsive to the detection of contact, determine the second computing device is an authorized device.

A method for utilizing a stylus to authenticate a user account across multiple computing devices is described herein. The method comprises: tracking a first session of the user account with respect to a first computing device of the multiple computing devices based on user interaction with the stylus; detecting contact between the stylus and a second computing device of the multiple computing devices; and subsequent said detecting contact between the stylus and the second computing device, causing a second session of the user account with respect to the second computing device to be established.

In an implementation of the foregoing method, said detecting contact comprises at least one of: detecting the contact by a sensor of the stylus; or detecting the contact by a digitizer of the second computing device.

In an implementation of the foregoing method, said causing the second session of the user account to be established comprises: causing the second session of the user account to be established based on an identifier of the stylus.

In an implementation of the foregoing method, said tracking the first session comprises detecting if a button of the stylus is pressed; and the method further comprises causing the second session of the user account to fail to establish in response to the button being released prior to detection of contact between the stylus and the second computing device.

In an implementation of the foregoing method, the method further comprises: maintaining an authentication token representative of the first session; and responsive to the detection of contact, providing the authentication token to the second computing device or an authentication server to cause the second session of the user account to establish.

In an implementation of the foregoing method, said providing the authentication token to the second computing device comprises: receiving a poll from the second computing device, the poll comprising a request for the authentication token; and transmitting a response to the poll comprising the authentication token.

In an implementation of the foregoing method, the method further comprises in response to a time since a previously detected contact between the stylus and the first computing device exceeding a timeout threshold, erasing the authentication token.

In an implementation of the foregoing method, the method further comprises raising a timeout flag in response to a time since a sensor of the stylus previously detected contact between the stylus and the first computing device exceeding a timeout threshold, the timeout flag preventing sessions of a user account from being established with a new computing device.

In an implementation of the foregoing method, the method further comprises, responsive to said detecting contact, determining the second computing device is an authorized device.

A system configured to authenticate a user account across multiple computing devices is described herein. The system comprising a processor circuit and a memory device. The memory device stores program code executable by the processor circuit to: track a first session of the user account with respect to a first computing device of the multiple computing devices based on user interaction with a stylus; receive an indication of contact between the stylus and a second computing device of the multiple computing devices; and establish a second session of the user account with respect to the second computing device.

In an implementation of the foregoing system, the indication comprises at least one of: an identifier of the stylus; an identifier of the second computing device; a timeout flag that indicates whether or not a time since previously indicated contact between the stylus and the first computing device exceeds a timeout threshold; a button press flag that indicates whether or not a button on the stylus is pressed; or an authentication token associated with the active session.

In an implementation of the foregoing system, to establish the second session of the user account, the program code is executable by the processor circuit to provide an authentication token to the second computing device.

### X. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the discussion, unless otherwise stated, adjectives modifying a condition or relationship characteristic of a feature or features of an implementation of the disclosure, should be understood to mean that the condition or characteristic is defined to within tolerances that are acceptable for operation of the implementation for an application for which it is intended. Furthermore, if the performance of an operation is described herein as being "in response to" one or more factors, it is to be understood that the one or more factors may be regarded as a sole contributing factor for causing the operation to occur or a contributing factor along with one or more additional factors for causing the operation to occur, and that the operation may occur at any time upon or after establishment of the one or more factors. Still further, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

Numerous example embodiments have been described above. Any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

Furthermore, example embodiments have been described above with respect to one or more running examples. Such running examples describe one or more particular implementations of the example embodiments; however, embodiments described herein are not limited to these particular implementations.

Moreover, according to the described embodiments and techniques, any components of systems, computing devices, servers, styluses, applications, session handlers, sensors, contact detectors, authenticator services, touch surfaces, touch units, digitizer sensors, digitizer signal processing components, user identifiers, device identifiers, session trackers, session establishers, contact evaluators, device authenticators, and/or their functions may be caused to be activated for operation/performance thereof based on other operations, functions, actions, and/or the like, including initialization, completion, and/or performance of the operations, functions, actions, and/or the like.

In some example embodiments, one or more of the operations of the flowcharts described herein may not be performed. Moreover, operations in addition to or in lieu of the operations of the flowcharts described herein may be performed. Further, in some example embodiments, one or more of the operations of the flowcharts described herein may be performed out of order, in an alternate sequence, or partially (or completely) concurrently with each other or with other operations.

The embodiments described herein and/or any further systems, sub-systems, devices and/or components disclosed herein may be implemented in hardware (e.g., hardware logic/electrical circuitry), or any combination of hardware with software (computer program code configured to be executed in one or more processors or processing devices) and/or firmware.

While various embodiments have been described above, it should be understood that they have been presented by way of example only, and not limitation. It will be apparent to persons skilled in the relevant art that various changes in form and detail can be made therein without departing from the scope of the embodiments. Thus, the breadth and scope of the embodiments should not be limited by any of the above-described example embodiments, but should be defined only in accordance with the following claims

## Claims

1. A stylus (104, 1406, 1530) configured to authenticate a user account across multiple computing devices (102A, 102B, 1402, 1502), the stylus (104, 1406, 1530) comprising:
a sensor (130) configured to detect contact between the stylus (104, 1406, 1530) and computing devices of the multiple computing devices (102A, 102B, 1402, 1502); and
a session handler component (126A) configured to:
track a first session of the user account (142) with respect to a first computing device of the multiple computing devices (102A, 1402, 1502) based on user interaction with the stylus (104, 1406, 1530), and
subsequent to detection of contact between the stylus (104, 1406, 1530) and a second computing device of the multiple computing devices (102B, 1402, 1502) by the sensor (130), cause a second session of the user account (146) with respect to the second computing device (102B, 1402, 1502) to be established,
**characterized in that** to track the first session, the session handler component is configured to detect a button of the stylus is pressed; and
in response to the button being released prior to detection of contact between the stylus and the second computing device, the session handler component is further configured to cause the second session of the user account to fail to establish.

2. The stylus of claim 1, wherein the second session of the user account is established based on an identifier of the stylus.

3. The stylus of claim 1, wherein the session handler component is further configured to:
maintain an authentication token representative of the first session; and
responsive to the detection of contact, provide the authentication token to the second computing device or an authentication server to cause the second session of the user account to establish.

4. The stylus of claim 3, wherein to provide the authentication token to the second computing device, the session handler component is further configured to:
receive a poll from the second computing device, the poll comprising a request for the authentication token; and
transmit a response to the poll comprising the authentication token.

5. The stylus of claim 3, wherein the session handler is further configured to erase the authentication token in response to a time since the sensor previously detected contact between the stylus and the first computing device exceeding a timeout threshold.

6. The stylus of claim 1, wherein the session handler is further configured to raise a timeout flag in response to a time since the sensor previously detected contact between the stylus and the first computing device exceeding a timeout threshold, the timeout flag preventing sessions of a user account from being established with a new computing device.

7. The stylus of claim 1, wherein the session handler is further configured to, responsive to the detection of contact, determine the second computing device is an authorized device.

8. A method for utilizing a stylus to authenticate a user account across multiple computing devices (300B), the method (300B) comprising:
tracking a first session of the user account with respect to a first computing device of the multiple computing devices based on user interaction with the stylus (310);
detecting contact between the stylus and a second computing device of the multiple computing devices (312); and
subsequent said detecting contact between the stylus and the second computing device, causing a second session of the user account with respect to the second computing device to be established (314),
**characterized in that** to track the first session, the session handler component is configured to detect a button of the stylus is pressed; and
in response to the button being released prior to detection of contact between the stylus and the second computing device, the session handler component is further configured to cause the second session of the user account to fail to establish.

9. The method of claim 8, wherein said detecting contact comprises at least one of:
detecting the contact by a sensor of the stylus; or
detecting the contact by a digitizer of the second computing device.

10. The method of claim 8, further comprising:
raising a timeout flag in response to a time since a sensor of the stylus previously detected contact between the stylus and the first computing device exceeding a timeout threshold, the timeout flag preventing sessions of a user account from being established with a new computing device.

11. The method of claim 8, further comprising:
responsive to said detecting contact, determining the second computing device is an authorized device.

12. A system (100, 900, 1100, 1500) configured to authenticate a user account across multiple computing devices (102A, 102B, 1402), the system (1500) comprising:
a processor circuit (1510); and
a memory device (1524, 1556, 1574, 1594) that stores program code (1514, 1576, 1596) executable by the processor circuit (1510) to:
track a first session of the user account (142) with respect to a first computing device of the multiple computing devices (102A, 1402) based on user interaction with a stylus (104, 1406);
receive an indication of contact (910, 1314) between the stylus (104, 1406) and a second computing device of the multiple computing devices (102B, 1402); and
establish a second session of the user account (146) with respect to the second computing device (102B, 1402),
**characterized in that** to track the first session, the session handler component is configured to detect a button of the stylus is pressed; and
in response to the button being released prior to detection of contact between the stylus and the second computing device, the session handler component is further configured to cause the second session of the user account to fail to establish.

13. The system of claim 12, wherein the indication comprises at least one of:
an identifier of the stylus;
an identifier of the second computing device;
a timeout flag that indicates whether or not a time since previously indicated contact between the stylus and the first computing device exceeds a timeout threshold;
a button press flag that indicates whether or not a button on the stylus is pressed; or
an authentication token associated with the active session.

14. The system of claim 12, wherein to establish the second session of the user account, the program code is executable by the processor circuit to:
provide an authentication token to the second computing device.

## Patentansprüche

1. Stylus (104, 1406, 1530), der konfiguriert ist, um ein Benutzerkonto auf mehreren Rechenvorrichtungen (102A, 102B, 1402, 1502) zu authentifizieren, wobei der Stylus (104, 1406, 1530) umfassend:
einen Sensor (130), der konfiguriert ist, um den Kontakt zwischen dem Stylus (104, 1406, 1530) und den Rechenvorrichtungen der mehreren Rechenvorrichtungen (102A, 102B, 1402, 1502) zu erkennen; und
eine Sitzungsverwaltungskomponente (126A), die konfiguriert ist, um:
eine erste Sitzung des Benutzerkontos (142) in Bezug auf eine erste Rechenvorrichtung der mehreren Rechenvorrichtungen (102A, 1402, 1502) basierend auf der Benutzerinteraktion mit dem Stylus (104, 1406, 1530) zu verfolgen, und
nach dem Erkennen eines Kontakts zwischen dem Stylus (104, 1406, 1530) und einer zweiten Rechenvorrichtung der mehreren Rechenvorrichtungen (102B, 1402, 1502) durch den Sensor (130) eine zweite Sitzung des Benutzerkontos (146) in Bezug auf die zweite Rechenvorrichtung (102B, 1402, 1502) zu veranlassen,
**dadurch gekennzeichnet, dass** zum Verfolgen der ersten Sitzung die Sitzungsverwaltungskomponente konfiguriert ist, um zu erkennen, wenn eine Taste des Stylus gedrückt wird; und
als Reaktion darauf, dass die Taste vor dem Erkennen eines Kontakts zwischen dem Stylus und der zweiten Rechenvorrichtung losgelassen wird, die Sitzungsverwaltungskomponente ferner konfiguriert ist, um zu veranlassen, dass die zweite Sitzung des Benutzerkontos nicht aufgebaut wird.

2. Stylus nach Anspruch 1, wobei die zweite Sitzung des Benutzerkontos basierend auf einer Kennung des Stylus eingerichtet wird.

3. Stylus nach Anspruch 1, wobei die Sitzungsverwaltungskomponente ferner konfiguriert ist, um:
ein Authentifizierungstoken zu verwalten, das die erste Sitzung repräsentiert; und
als Reaktion auf das Erkennen eines Kontakts das Authentifizierungstoken an die zweite Rechenvorrichtung oder einen Authentifizierungsserver zu übermitteln, um den Aufbau der zweiten Sitzung des Benutzerkontos zu veranlassen.

4. Stylus nach Anspruch 3, wobei die Sitzungsverwaltungskomponente zum Bereitstellen des Authentifizierungstokens an die zweite Rechenvorrichtung ferner konfiguriert ist, um:
eine Abfrage von der zweiten Rechenvorrichtung zu empfangen, die Abfrage umfassend eine Anforderung des Authentifizierungstokens; und
eine Antwort auf die Abfrage zu senden, die das Authentifizierungstoken enthält.

5. Stylus nach Anspruch 3, wobei die Sitzungsverwaltung ferner konfiguriert ist, um das Authentifizierungstoken zu löschen als Reaktion darauf, dass die Zeit, die seit der vorstehenden Erkennung eines Kontakts zwischen dem Stylus und der ersten Rechenvorrichtung durch den Sensor vergangen ist, einen Timeout-Schwellenwert überschreitet.

6. Stylus nach Anspruch 1, wobei die Sitzungsverwaltung ferner konfiguriert ist, um eine Timeout-Markierung zu setzen als Reaktion darauf, dass die Zeit, die seit der vorstehenden Erkennung eines Kontakts zwischen dem Stylus und der ersten Rechenvorrichtung durch den Sensor vergangen ist, einen Timeout-Schwellenwert überschreitet., wobei die Timeout-Markierung verhindert, dass Sitzungen eines Benutzerkontos mit einer neuen Rechenvorrichtung aufgebaut werden.

7. Stylus nach Anspruch 1, wobei die Sitzungsverwaltung ferner konfiguriert ist, um als Reaktion auf das Erkennen eines Kontakts zu bestimmen, dass es sich bei der zweiten Rechenvorrichtung um eine autorisierte Vorrichtung handelt.

8. Verfahren zum Nutzen eines Stylus zum Authentifizieren eines Benutzerkontos auf mehreren Rechenvorrichtungen (300B), das Verfahren (300B) umfassend:
Verfolgen einer ersten Sitzung des Benutzerkontos in Bezug auf eine erste Rechenvorrichtung der mehreren Rechenvorrichtungen basierend auf der Benutzerinteraktion mit dem Stylus (310);
Erkennen eines Kontakts zwischen dem Stylus und einer zweiten Rechenvorrichtung der mehreren Rechenvorrichtungen (312); und
nach dem Erkennen des Kontakts zwischen dem Stylus und der zweiten Rechenvorrichtung das Veranlassen der Einrichtung einer zweiten Sitzung des Benutzerkontos in Bezug auf die zweite Rechenvorrichtung (314),
**dadurch gekennzeichnet, dass** zum Verfolgen der ersten Sitzung die Sitzungsverwaltungskomponente konfiguriert ist, um das Drücken einer Taste des Stylus zu erkennen; und
als Reaktion darauf, dass die Taste vor dem Erkennen eines Kontakts zwischen dem Stylus und der zweiten Rechenvorrichtung losgelassen wird, die Sitzungsverwaltungskomponente ferner konfiguriert ist, um zu veranlassen, dass die zweite Sitzung des Benutzerkontos nicht aufgebaut wird.

9. Verfahren nach Anspruch 8, wobei das Erkennen des Kontakts mindestens eines der Folgenden umfasst:
Erkennen des Kontakts durch einen Sensor des Stylus; oder
Erkennen des Kontakts durch einen Digitalisierer der zweiten Rechenvorrichtung.

10. Verfahren nach Anspruch 8, ferner umfassend:
Setzen einer Timeout-Markierung als Reaktion darauf, dass die Zeit, die seit der vorstehenden Erkennung eines Kontakts zwischen dem Stylus und der ersten Rechenvorrichtung durch einen Sensor des Stylus vergangen ist, einen Timeout-Schwellenwert überschreitet, wobei die Timeout-Markierung verhindert, dass Sitzungen eines Benutzerkontos mit einer neuen Rechenvorrichtung aufgebaut werden.

11. Verfahren nach Anspruch 8, ferner umfassend:
als Reaktion auf das Erkennen des Kontakts Bestimmen, ob es sich bei der zweiten Rechenvorrichtung um eine autorisierte Vorrichtung handelt.

12. System (100, 900, 1100, 1500), das konfiguriert ist, um ein Benutzerkonto über mehrere Rechenvorrichtungen (102A, 102B, 1402) hinweg zu authentifizieren, das System (1500) umfassend:
eine Prozessorschaltung (1510); und
eine Speichervorrichtung (1524, 1556, 1574, 1594), die Programmcode (1514, 1576, 1596) speichert, der von der Prozessorschaltung (1510) ausgeführt werden kann, um:
eine erste Sitzung des Benutzerkontos (142) in Bezug auf eine erste Rechenvorrichtung der mehreren Rechenvorrichtungen (102A, 1402) basierend auf der Benutzerinteraktion mit dem Stylus (104, 1406) zu verfolgen;
eine Angabe eines Kontakts (910, 1314) zwischen dem Stylus (104, 1406) und einer zweiten Rechenvorrichtung der mehreren Rechenvorrichtungen (102B, 1402) zu empfangen; und
eine zweite Sitzung des Benutzerkontos (146) in Bezug auf die zweite Rechenvorrichtung (102B, 1402) einzurichten, **dadurch gekennzeichnet, dass** zum Verfolgen der ersten Sitzung die Sitzungsverwaltungskomponente konfiguriert ist, um das Drücken einer Taste des Stylus zu erkennen; und
als Reaktion darauf, dass die Taste vor dem Erkennen eines Kontakts zwischen dem Stylus und der zweiten Rechenvorrichtung losgelassen wird, die Sitzungsverwaltungskomponente ferner konfiguriert ist, um zu veranlassen, dass die zweite Sitzung des Benutzerkontos nicht aufgebaut wird.

13. System nach Anspruch 12, wobei die Angabe mindestens eines der Folgenden umfasst:
eine Kennung des Stylus;
eine Kennung der zweiten Rechenvorrichtung;
eine Timeout-Markierung, die angibt, ob die Zeit seit dem vorstehend angegebenen Kontakt zwischen dem Stylus und der ersten Rechenvorrichtung einen Timeout-Schwellenwert überschreitet oder nicht;
eine Tastendruck-Markierung, die angibt, ob eine Taste am Stylus gedrückt wird oder nicht; oder
ein Authentifizierungstoken, das der aktiven Sitzung zugeordnet ist.

14. System nach Anspruch 12, wobei der Programmcode zum Einrichten der zweiten Sitzung des Benutzerkontos von der Prozessorschaltung ausgeführt werden kann, um:
der zweiten Rechenvorrichtung ein Authentifizierungstoken bereitzustellen.

## Revendications

1. Stylet (104, 1406, 1530) configuré pour authentifier un compte utilisateur sur plusieurs dispositifs informatiques (102A, 102B, 1402, 1502), le stylet (104, 1406, 1530) comprenant :
un capteur (130) configuré pour détecter le contact entre le stylet (104, 1406, 1530) et des dispositifs informatiques parmi des multiples dispositifs informatiques (102A, 102B, 1402, 1502) ; et
un composant de gestion des sessions (126A) configuré pour :
suivre une première session du compte utilisateur (142) par rapport à un premier dispositif informatique parmi les multiples dispositifs informatiques (102A, 1402, 1502) en fonction de l'interaction de l'utilisateur avec le stylet (104, 1406, 1530), et
à la suite de la détection d'un contact entre le stylet (104, 1406, 1530) et un second dispositif informatique parmi les multiples dispositifs informatiques (102B, 1402, 1502) par le capteur (130), amener l'établissement d'une seconde session du compte utilisateur (146) par rapport au second dispositif informatique (102B, 1402, 1502),
**caractérisé en ce que** pour suivre la première session, le composant de gestion des sessions est configuré pour détecter un enfoncement d'un bouton du stylet ; et
en réponse au relâchement du bouton avant la détection d'un contact entre le stylet et le second dispositif informatique, le composant de gestion des sessions est en outre configuré pour empêcher l'établissement de la seconde session du compte utilisateur.

2. Stylet selon la revendication 1, dans lequel la seconde session du compte utilisateur est établie en fonction d'un identifiant du stylet.

3. Stylet selon la revendication 1, dans lequel le composant de gestion des sessions est en outre configuré pour :
conserver un jeton d'authentification correspondant à la première session ; et
en réponse à la détection d'un contact, fournir le jeton d'authentification au second dispositif informatique ou à un serveur d'authentification afin de permettre l'établissement de la seconde session du compte utilisateur.

4. Stylet selon la revendication 3, dans lequel, afin de fournir le jeton d'authentification au seconde dispositif informatique, le composant de gestion de sessions est en outre configuré pour :
recevoir une requête provenant du second dispositif informatique, la requête comprenant une demande de jeton d'authentification ; et
transmettre une réponse à la requête comprenant le jeton d'authentification.

5. Stylet selon la revendication 3, dans lequel le gestionnaire de sessions est en outre configuré pour effacer le jeton d'authentification lorsque le délai écoulé depuis la précédente détection par le capteur d'un contact entre le stylet et le premier dispositif informatique dépasse un seuil de délai d'expiration.

6. Stylet selon la revendication 1, dans lequel le gestionnaire de sessions est en outre configuré pour activer un indicateur de délai d'expiration lorsqu'un temps écoulé depuis la précédente détection par le capteur d'un contact entre le stylet et le premier dispositif informatique dépasse un seuil de délai d'expiration, l'indicateur de délai d'expiration empêchant l'établissement de sessions d'un compte utilisateur avec un nouveau dispositif informatique.

7. Stylet selon la revendication 1, dans lequel le gestionnaire de sessions est en outre configuré pour, en réponse à la détection d'un contact, déterminer que le second dispositif informatique est un dispositif autorisé.

8. Procédé permettant d'utiliser un stylet pour authentifier un compte utilisateur sur plusieurs dispositifs informatiques (300B), le procédé (300B) comprenant :
le suivi d'une première session du compte utilisateur par rapport à un premier dispositif informatique parmi les multiples dispositifs informatiques, en fonction de l'interaction de l'utilisateur avec le stylet (310) ;
la détection d'un contact entre le stylet et un second dispositif informatique parmi les multiples dispositifs informatiques (312) ; et
à la suite de ladite détection d'un contact entre le stylet et le second dispositif informatique, le fait de provoquer l'établissement d'une seconde session du compte utilisateur par rapport au second dispositif informatique (314),
**caractérisé en ce que** pour suivre la première session, le composant de gestion des sessions est configuré pour détecter un enfoncement d'un bouton du stylet ; et
en réponse au relâchement du bouton avant la détection d'un contact entre le stylet et le second dispositif informatique, le composant de gestion des sessions est en outre configuré pour empêcher l'établissement de la seconde session du compte utilisateur.

9. Procédé selon la revendication 8, dans lequel ladite détection du contact comprend au moins l'une parmi :
la détection du contact par un capteur du stylet ; ou
la détection du contact par un numériseur du second dispositif informatique.

10. Procédé selon la revendication 8, comprenant en outre :
l'activation d'un indicateur de délai d'expiration lorsqu'un temps écoulé depuis qu'un capteur du stylet a détecté précédemment un contact entre le stylet et le premier dispositif informatique dépasse un seuil de délai d'expiration, l'indicateur d'expiration empêchant l'établissement de sessions d'un compte utilisateur avec un nouveau dispositif informatique.

11. Procédé selon la revendication 8, comprenant en outre :
en réponse à ladite détection de contact, la détermination que le second dispositif informatique est un dispositif autorisé.

12. Système (100, 900, 1100, 1500) configuré pour authentifier un compte utilisateur sur plusieurs dispositifs informatiques (102A, 102B, 1402), le système (1500) comprenant :
un circuit de traitement (1510) ; et
un dispositif de mémoire (1524, 1556, 1574, 1594) qui stocke un code de programme (1514, 1576, 1596) exécutable par le circuit processeur (1510) afin de :
suivre une première session du compte utilisateur (142) par rapport à un premier dispositif informatique parmi les multiples dispositifs informatiques (102A, 1402), en fonction de l'interaction de l'utilisateur avec un stylet (104, 1406) ;
recevoir une indication de contact (910, 1314) entre le stylet (104, 1406) et un second dispositif informatique parmi les multiples dispositifs informatiques (102B, 1402) ; et
établir une seconde session du compte utilisateur (146) par rapport au second dispositif informatique (102B, 1402),
**caractérisé en ce que** pour suivre la première session, le composant de gestion des sessions est configuré pour détecter un enfoncement d'un bouton du stylet ; et
en réponse au relâchement du bouton avant la détection d'un contact entre le stylet et le second dispositif informatique, le composant de gestion des sessions est en outre configuré pour empêcher l'établissement de la seconde session du compte utilisateur.

13. Système selon la revendication 12, dans lequel l'indication comprend au moins l'un parmi :
un identifiant du stylet ;
un identifiant du second dispositif informatique ;
un indicateur de délai d'expiration indiquant si le temps écoulé depuis le contact précédemment détecté entre le stylet et le premier dispositif informatique dépasse ou non un seuil de délai d'expiration ;
un indicateur d'activation de bouton qui indique si un bouton du stylet est enfoncé ou non ; ou
un jeton d'authentification associé à la session active.

14. Système selon la revendication 12, dans lequel, pour établir la seconde session du compte utilisateur, le code de programme est exécutable par le circuit processeur afin de :
fournir un jeton d'authentification au second dispositif informatique.
